(19)

**Europäisches Patentamt**
**European Patent Office**
**Office européen des brevets**

(11) **EP 3 614 616 B1**

(12) **EUROPEAN PATENT SPECIFICATION**

(45) Date of publication and mention
of the grant of the patent:
**24.02.2021 Bulletin 2021/08**

(51) Int Cl.:
*H04L 5/00* $^{(2006.01)}$     *H04W 56/00* $^{(2009.01)}$
*H04L 1/16* $^{(2006.01)}$     *H04L 1/18* $^{(2006.01)}$
*H04L 1/00* $^{(2006.01)}$

(21) Application number: **19203261.3**

(22) Date of filing: **07.12.2015**

(54) **METHOD AND USER EQUIPMENT FOR TRANSMITTING PUCCH WHEN MORE THAN FIVE CELLS ARE USED ACCORDING TO CARRIER AGGREGATION**

VERFAHREN UND BENUTZERGERÄT ZUR PUCCH-ÜBERTRAGUNG BEI VERWENDUNG VON MEHR ALS FÜNF ZELLEN GEMÄSS TRÄGERAGGREGATION

PROCÉDÉ ET ÉQUIPEMENT UTILISATEUR DE TRANSMISSION DE CANAUX PUCCH LORS DE L'UTILISATION DE PLUS DE CINQ CELLULES SELON UNE AGRÉGATION DE PORTEUSES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.12.2014 US 201462089209 P**
**26.12.2014 US 201462096901 P**
**13.01.2015 US 201562103021 P**
**12.03.2015 US 201562131846 P**
**16.03.2015 US 201562133479 P**
**05.11.2015 US 201562251658 P**
**06.11.2015 US 201562251700 P**
**17.11.2015 US 201562256650 P**
**17.11.2015 US 201562256133 P**

(43) Date of publication of application:
**26.02.2020 Bulletin 2020/09**

(62) Document number(s) of the earlier application(s) in accordance with Art. 76 EPC:
**15867642.9 / 3 232 594**

(73) Proprietor: **LG Electronics Inc.**
**Seoul 07336 (KR)**

(72) Inventors:
• **HWANG, Daesung**
**06772 Seoul (KR)**
• **YANG, Suckchel**
**06772 Seoul (KR)**
• **PARK, Hanjun**
**06772 Seoul (KR)**

(74) Representative: **Frenkel, Matthias Alexander**
**Wuesthoff & Wuesthoff**
**Patentanwälte PartG mbB**
**Schweigerstrasse 2**
**81541 München (DE)**

(56) References cited:
**EP-A2- 2 536 050**     **US-A1- 2014 078 942**

• **LG ELECTRONICS: "New PUCCH format design for Rel-13 CA", 3GPP DRAFT; R1-155375 NEW PUCCH DESIGN_F, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Malmö, Sweden; 20151005 - 20151009 26 September 2015 (2015-09-26), XP051021548, Retrieved from the Internet: URL:http://www.3gpp.org/ftp/tsg_ran/WG1_RL 1/TSGR1_82b/Docs/ [retrieved on 2015-09-26]**
• **"3rd Generation Partnership Project; Technical Specification Group Radio Access Network; Evolved Universal Terrestrial Radio Access (E-UTRA); Physical Channels and Modulation (Release 9)", 3GPP STANDARD ; TECHNICAL SPECIFICATION ; 3GPP TS 36.211, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. V9.1.0, 21 March 2010 (2010-03-21), pages 1-85, XP051296785, [retrieved on 2010-03-21]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**BACKGROUND OF THE INVENTION**

Field of the invention

The present invention relates to mobile communication.

Related Art

3GPP (3rd Generation Partnership Project) LTE (Long Term Evolution) that is an advancement of UMTS (Universal Mobile Telecommunication System) is being introduced with 3GPP release 8. In 3GPP LTE, OFDMA (orthogonal frequency division multiple access) is used for downlink, and SC-FDMA (single carrier-frequency division multiple access) is used for uplink. The 3GPP LTE adopts MIMO (multiple input multiple output) having maximum four antennas. Recently, a discussion of 3GPP LTE-A (LTE-Advanced) which is the evolution of the 3GPP LTE is in progress.

As set forth in 3GPP TS 36.211 V10.4.0, the physical channels in 3GPP LTE may be classified into data channels such as PDSCH (physical downlink shared channel) and PUSCH (physical uplink shared channel) and control channels such as PDCCH (physical downlink control channel), PCFICH (physical control format indicator channel), PHICH (physical hybrid-ARQ indicator channel) and PUCCH (physical uplink control channel).

Meanwhile, in order to cope with the amount of data which gradually increases, a carrier aggregation (CA) technology that aggregates up to 5 carriers in LTE-Advanced is presented.

However, since the amount of the data rapidly increases day by day, it is discussed that more than 5 carriers are aggregated in a next-generation mobile communication system.

However, when more than 5 carriers are aggregated as described above, more bits need to be transmitted through a PUCCH. However, up to now, there is a problem that up a maximum of 22 bits may be transmitted through the PUCCH.

EP 2 536 050 A2 describes a data transmission method and device in a wireless communication system. In the document the device is described to transmit uplink control information (UCI) using a physical uplink control channel (PUCCH) resource, allocated to a first component carrier (CC) among a plurality of CC's, in a sounding reference signal (SRS) subframe. The plurality of CC's in the SRS subframe is described to include a second CC which comprises a single carrier-frequency division multiple access (SRS SC-FDMA) symbol, which is reserved to transmit SRS.

US 2014/078942 A1 relates to transmitting a control channel, multiplexing an uplink control channel, and multiplexing a sounding reference signal for user equipment configured with carrier aggregation.

**SUMMARY OF THE INVENTION**

Accordingly, the disclosure of the specification has been made in an effort to solve the problem.

Preferred embodiments of the present disclosure are defined in the appended claims. In an aspect, a method for transmitting a physical uplink control channel (PUCCH) including uplink control information (UCI). The method may be performed by a user equipment (UE) which uses more than five cells according to carrier aggregation. The method may include: encoding UCI of K bits, which exceeds 20 bits, and outputting encoded bits of N bits; and mapping on resource elements (RE) in an uplink subframe, without applying an orthogonal cover code (OCC) to the encoded N bits. Herein, the uplink subframe may include two symbols, and each symbol may include 12 subcarriers on a frequency axis and six or seven symbols on a time axis. The mapping may be carried out according to a symbol index among symbols remaining after excluding symbols for a demodulation reference signal (DMRS) and a subcarrier index.

The mapping may be carried out in an order in which the symbol index first increases and then, the subcarrier index increases among the remaining symbols other than the symbol for the DMRS.

The mapping may be carried out in an order in which the subcarrier index first increases and then, the symbol index increases among the remaining symbols other than the symbol for the DMRS.

The symbol for the DMRS may be a second symbol and a sixth symbol or a fourth symbol or third to fifth symbols in a subframe in which a normal cyclic prefix (CP) is used. The symbol for the DMRS may be the third symbol or the fourth symbol, or the third and fourth symbols in the subframe in which an extended CP is used.

When transmission of the PUCCH and transmission of a sounding reference signal (SRS) are simultaneously configured in the uplink subframe, the PUCCH may not be transmitted in a last symbol of the subframe.

When the UE transmits the SRS in the same uplink subframe, when the uplink subframe is a subframe in which a cell-specific SRS is configured and the transmission of the PUCCH partially overlaps with a cell-specific SRS bandwidth, when the uplink subframe is a UE-specific and aperiodic SRS subframe and the SRS transmission is reserved, or when the UE configures a plurality of timing advance groups (TAGs) and the uplink subframe the UE-specific and aperiodic SRS subframe and the SRS transmission is reserved, the PUCCH may not be transmitted on the last symbol of the subframe.

In another aspect, a user equipment (UE) for transmitting a physical uplink control channel (PUCCH) including uplink control information (UCI), when more than five cells are used according to carrier aggregation is provided. The user equipment may include: an RF unit; and a processor including the RF unit. The processor may carry out a process of encoding UCI of K bits, which exceeds 20 bits, and outputting encoded bits of N bits; and a process of mapping on resource elements (RE) in an uplink subframe, without applying an orthogonal cover code (OCC) to the encoded N bits. Herein, the uplink subframe may include two symbols, and each symbol may include 12 subcarriers on a frequency axis and six or seven symbols on a time axis. The mapping process may be carried out according to a symbol index and from among symbols remaining after excluding symbols for a demodulation reference signal (DMRS) and a subcarrier index.

According to the disclosure of the present specification, the problems of the above-described prior art are solved.

## BRIEF DESCRIPTION OF THE DRAWINGS

FIG. 1 illustrates a wireless communication system.

FIG. 2 illustrates the architecture of a radio frame according to frequency division duplex (FDD) of 3rd generation partnership project (3GPP) long term evolution (LTE).

FIG. 3 illustrates the architecture of a downlink radio frame according to time division duplex (TDD) in 3GPP LTE.

FIG. 4 illustrates an example resource grid for one uplink or downlink slot in 3GPP LTE.

FIG. 5 illustrates the architecture of a downlink subframe.

FIG. 6 is an exemplary diagram illustrating a transmission region based on the PUCCH formation.

FIG. 7a illustrates a channel structure of PUCCH format 1b in a normal CP.

FIG. 7b illustrates a channel structure of PUCCH format 2/2a/2b in the normal CP.

FIG. 7c illustrates the channel structure of PUCCH format 3.

FIGS. 8a and 8b are one example of a subframe in which a DMRS for a PUSCH is transmitted.

FIG. 9 is a diagram illustrating an environment of heterogeneous networks of a macro cell and a small cell which may become a next-generation wireless communication system.

FIG. 10 is an exemplary diagram illustrating a concept of eCA which may become the next-generation wireless communication system.

FIGS. 11a to 11e illustrate a slot including symbols in which PUCCHs multiplexed through the OCC and a DMRS are mapped to each other in the case of a normal CP.

FIGS. 12a to 12e illustrate the slot including the symbols in which the PUCCHs multiplexed through the OCC and the DMRS are mapped to each other in the case of an extended CP.

FIGS. 13a to 13d illustrate an applied second slot in a shortened PUCCH format in the case of the normal CP.

FIGS. 14a to 14c illustrate the applied second slot in the shortened PUCCH format in the case of the extended CP.

FIGS. 15a to 15c illustrate a slot including symbols in which an OCC-less PUCCH and the DMRS are mapped to each other in the case of the normal CP.

FIGS. 16a to 16c illustrate the slot including the symbols in which the OCC-less PUCCH and the DMRS are mapped to each other in the case of the extended CP.

FIG. 17 is a block diagram illustrating a wireless communication system in which the disclosure of the present invention is implemented.

## DESCRIPTION OF EXEMPLARY EMBODIMENTS

Hereinafter, based on 3rd Generation Partnership Project (3GPP) long term evolution (LTE) or 3GPP LTE-advanced (LTE-A), the present invention will be applied. This is just an example, and the present invention may be applied to various wireless communication systems. Hereinafter, LTE includes LTE and/or LTE-A.

The technical terms used herein are used to merely describe specific embodiments and should not be construed as limiting the present invention. Further, the technical terms used herein should be, unless defined otherwise, interpreted as having meanings generally understood by those skilled in the art but not too broadly or too narrowly. Further, the technical terms used herein, which are determined not to exactly represent the scope of the invention, should be replaced by or understood by such technical terms as being able to be exactly understood by those skilled in the art. Further, the general terms used herein should be interpreted in the context as defined in the dictionary, but not in an excessively narrowed manner.

The expression of the singular number in the specification includes the meaning of the plural number unless the meaning of the singular number is definitely different from that of the plural number in the context. In the following description, the term 'include' or 'have' may represent the existence of a feature, a number, a step, an operation, a component, a part or the combination thereof described in the specification, and may not exclude the existence or addition of another feature, another number, another step, another operation, another component, another part or the combination thereof.

The terms 'first' and 'second' are used for the purpose of explanation about various components, and the components are not limited to the terms 'first' and 'second'. The terms 'first' and 'second' are only used to distinguish one component from another component. For example, a first component may be named as a second component without deviating from the scope of the present invention, The scope of the invention is defined by the appended claims.

It will be understood that when an element or layer is referred to as being "connected to" or "coupled to" another element or layer, it can be directly connected or coupled to the other element or layer or intervening elements or layers may be present. In contrast, when an element is referred to as being "directly connected to" or "directly coupled to" another element or layer, there are no intervening elements or layers present.

Hereinafter, embodiments of the present invention will be described in greater detail with reference to the accompanying drawings. In describing the present invention, for ease of understanding, the same reference numerals are used to denote the same components throughout the drawings, and repetitive description on the same components will be omitted. Detailed description on well-known arts which are determined to make the gist of the invention unclear will be omitted. The accompanying drawings are provided to merely make the scope of the invention readily understood, but not should be intended to be limiting of the invention. It should be understood that the scope of the invention may be expanded to its modifications, replacements or equivalents in addition to what is shown in the drawings, without departing from the scope of the appended claims. Any reference to an embodiment which does not fall under the scope of the claims is to be understood as an example useful for understanding the invention.

As used herein, 'base station' generally refers to a fixed station that communicates with a wireless device and may be denoted by other terms such as eNB (evolved-NodeB), BTS (base transceiver system), or access point.

As used herein, user equipment (UE) may be stationary or mobile, and may be denoted by other terms such as device, wireless device, terminal, MS(mobile station), UT(user terminal), SS(subscriber station), MT(mobile terminal) and etc.

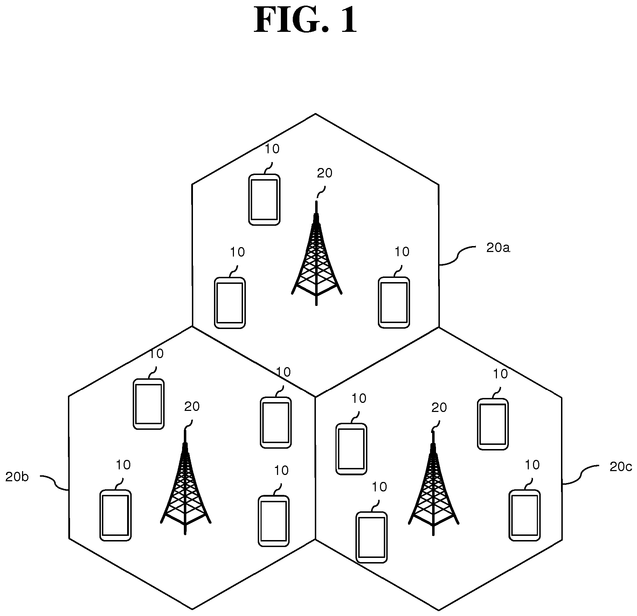

**FIG. 1 illustrates a wireless communication system.**

As seen with reference to FIG. 1, the wireless communication system includes at least one base station (BS) 20. Each base station 20 provides a communication service to specific geographical areas (generally, referred to as cells) 20a, 20b, and 20c. The cell can be further divided into a plurality of areas (sectors).

The UE generally belongs to one cell and the cell to which the terminal belong is referred to as a serving cell. A base station that provides the communication service to the serving cell is referred to as a serving BS. Since the wireless communication system is a cellular system, another cell that neighbors to the serving cell is present. Another cell which neighbors to the serving cell is referred to a neighbor cell. A base station that provides the communication service to the neighbor cell is referred to as a neighbor BS. The serving cell and the neighbor cell are relatively decided based on the UE.

Hereinafter, a downlink means communication from the base station 20 to the UEI 10 and an uplink means communication from the UE 10 to the base station 20. In the downlink, a transmitter may be a part of the base station 20 and a receiver may be a part of the UE 10. In the uplink, the transmitter may be a part of the UE 10 and the receiver may be a part of the base station 20.

Meanwhile, the wireless communication system may be generally divided into a frequency division duplex (FDD) type and a time division duplex (TDD) type. According to the FDD type, uplink transmission and downlink transmission are achieved while occupying different frequency bands. According to the TDD type, the uplink transmission and the downlink transmission are achieved at different time while occupying the same frequency band. A channel response of the TDD type is substantially reciprocal. This means that a downlink channel response and an uplink channel response are approximately the same as each other in a given frequency area. Accordingly, in the TDD based wireless communication system, the downlink channel response may be acquired from the uplink channel response. In the TDD type, since an entire frequency band is time-divided in the uplink transmission and the downlink transmission, the downlink transmission by the base station and the uplink transmission by the terminal may not be performed simultaneously. In the TDD system in which the uplink transmission and the downlink transmission are divided by the unit of a sub-frame, the uplink transmission and the downlink transmission are performed in different sub-frames.

Hereinafter, the LTE system will be described in detail.

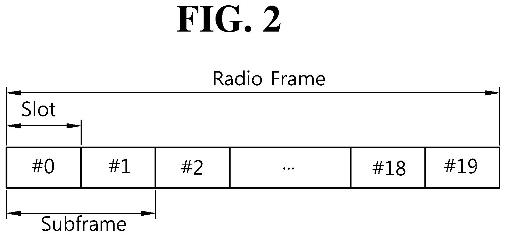

**FIG. 2 shows a downlink radio frame structure according to FDD of 3rd generation partnership project (3GPP) long term evolution (LTE).**

The radio frame of FIG. 2 may be found in the section 5 of 3GPP TS 36.211 V10.4.0 (2011-12) "Evolved Universal Terrestrial Radio Access (E-UTRA); Physical Channels and Modulation (Release 10)".

Referring to FIG. 2, the radio frame consists of 10 subframes. One subframe consists of two slots. Slots included in the radio frame are numbered with slot numbers 0 to 19. A time required to transmit one subframe is defined as a transmission time interval (TTI). The TTI may be a scheduling unit for data transmission. For example, one radio frame may have a length of 10 milliseconds (ms), one subframe may have a length of 1 ms, and one slot may have a length of 0.5 ms.

The structure of the radio frame is for exemplary purposes only, and thus the number of subframes included in the radio frame or the number of slots included in the subframe may change variously.

Meanwhile, one slot may include a plurality of orthogonal frequency division multiplexing (OFDM) symbols. The number of OFDM symbols included in one slot may vary depending on a cyclic prefix (CP). One slot includes 7 OFDM symbols in case of a normal CP, and one slot includes 6 OFDM symbols in case of an extended CP. Herein, since the 3GPP LTE uses orthogonal frequency division multiple access (OFDMA) in a downlink (DL), the OFDM symbol is only for expressing one symbol period in a time domain, and there is no limitation in a multiple access scheme or terminologies. For example, the OFDM symbol may also be referred to as another terminology such as a single carrier frequency division multiple access (SC-FDMA) symbol, a symbol period, etc.

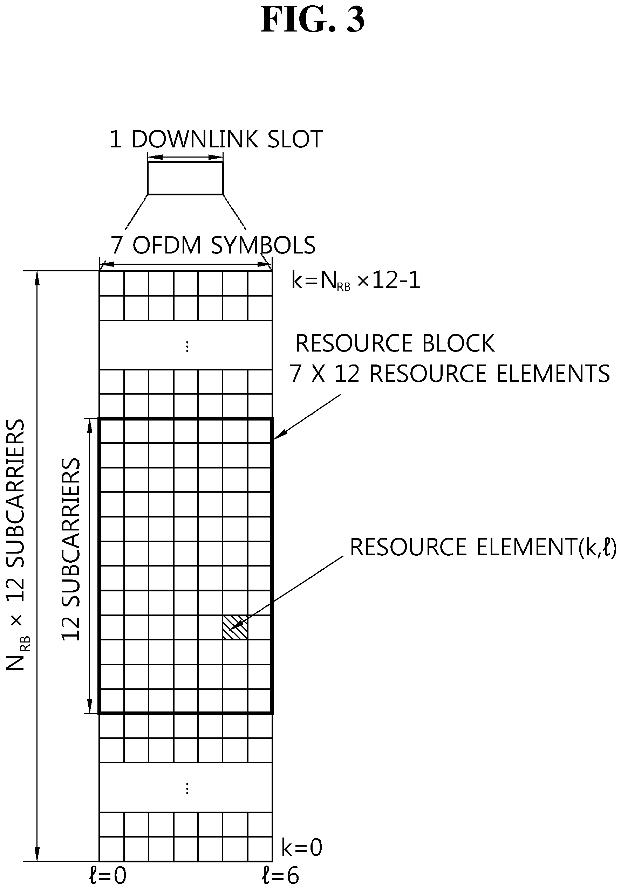

FIG. 3 illustrates an example resource grid for one uplink or downlink slot in 3GPP LTE.

Referring to FIG. 3, the uplink slot includes a plurality of OFDM (orthogonal frequency division multiplexing) symbols in the time domain and NRB resource blocks (RBs) in the frequency domain. For example, in the LTE system, the number of resource blocks (RBs), i.e., $N_{RB}$, may be one from 6 to 110.

Resource block (RB) is a resource allocation unit and includes a plurality of subcarriers in one slot. For example, if one slot includes seven OFDM symbols in the time domain and the resource block includes 12 sub-carriers in the frequency domain, one resource block may include 7x12 resource elements (REs).

Meanwhile, the number of sub-carriers in one OFDM symbol may be one of 128, 256, 512, 1024, 1536, and 2048.

In 3GPP LTE, the resource grid for one uplink slot shown in FIG. 3 may also apply to the resource grid for the downlink slot.

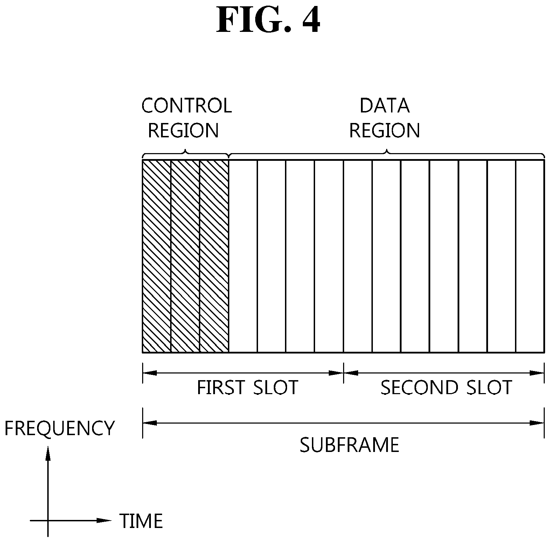

FIG. 4 illustrates the architecture of a downlink sub-frame.

In FIG. 4, assuming the normal CP, one slot includes seven OFDM symbols, by way of example.

The DL (downlink) sub-frame is split into a control region and a data region in the time domain. The control region includes up to first three OFDM symbols in the first slot of the sub-frame. However, the number of OFDM symbols included in the control region may be changed. A PDCCH (physical downlink control channel) and other control channels are allocated to the control region, and a PDSCH is allocated to the data region.

The physical channels in 3GPP LTE may be classified into data channels such as PDSCH (physical downlink shared channel) and PUSCH (physical uplink shared channel) and control channels such as PDCCH (physical downlink control channel), PCFICH (physical control format indicator channel), PHICH (physical hybrid-ARQ indicator channel) and PUCCH (physical uplink control channel).

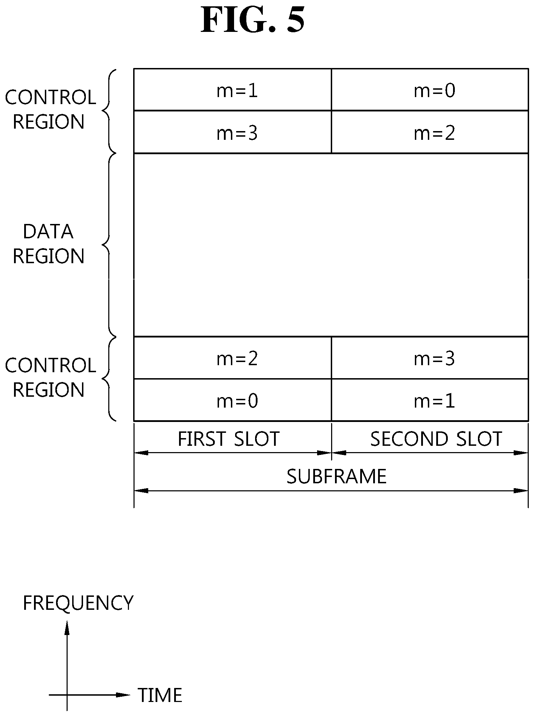

FIG. 5 illustrates the architecture of an uplink sub-frame in 3GPP LTE.

Referring to FIG.5, the uplink sub-frame may be separated into a control region and a data region in the frequency domain. The control region is assigned a PUCCH (physical uplink control channel) for transmission of uplink control information. The data region is assigned a PUSCH (physical uplink shared channel) for transmission of data (in some cases, control information may also be transmitted).

The PUCCH for one terminal is assigned in resource block (RB) pair in the subframe. The resource blocks in the resource block pair take up different sub-carriers in each of the first and second slots. The frequency occupied by the resource blocks in the resource block pair assigned to the PUCCH is varied with respect to a slot boundary. This is referred to as the RB pair assigned to the PUCCH having been frequency-hopped at the slot boundary.

The terminal may obtain a frequency diversity gain by transmitting uplink control information through different sub-carriers over time. m is a location index that indicates a logical frequency domain location of a resource block pair assigned to the PUCCH in the sub-frame.

The uplink control information transmitted on the PUCCH includes an HARQ (hybrid automatic repeat request), an ACK (acknowledgement)/NACK (non-acknowledgement), a CQI (channel quality indicator) indicating a downlink channel state, and an SR (scheduling request) that is an uplink radio resource allocation request.

The PUSCH is mapped with a UL-SCH that is a transport channel. The uplink data transmitted on the PUSCH may be a transport block that is a data block for the UL-SCH transmitted for the TTI. The transport block may be user information. Or, the uplink data may be multiplexed data. The multiplexed data may be data obtained by multiplexing the transport block for the UL-SCH and control information. For example, the control information multiplexed with the data may include a CQI, a PMI (precoding matrix indicator), an HARQ, and an RI (rank indicator).Or, the uplink data may consist only of control information.

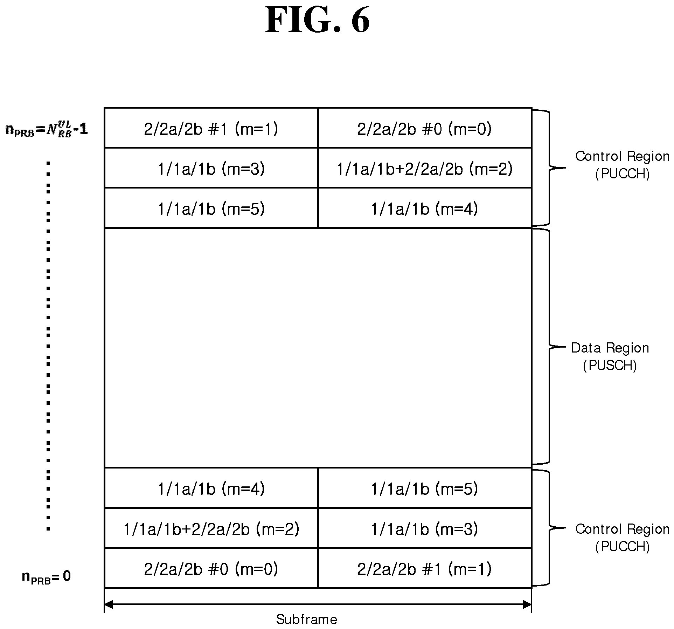

FIG. 6 illustrates the PUCCH and the PUSCH on an uplink subframe.

PUCCH formats will be described with reference to FIG. 6.

The PUCCH format 1 carries the scheduling request (SR). In this case, an on-off keying (OOK) mode may be applied. The PUCCH format la carries acknowledgement/non-acknowledgement (ACK/NACK) modulated in a binary phase shift keying (BPSK) mode with respect to one codeword. The PUCCH format 1b carries ACK/NACK modulated in a quadrature phase shift keying (QPSK) mode with respect to two codewords. The PUCCH format 2 carries a channel quality indicator (CQI) modulated in the QPSK mode. The PUCCH formats 2a and 2b carry the CQI and the ACK/NACK.

A table given below carries the PUCCH formats.

**[Table 1]**

| Format | Modulation mode | Total bit Description count per subframe | |
|---|---|---|---|
| Format 1 | Undecided | Undecided | Scheduling request (SR) |
| Format 1a | BPSK | 1 | ACK/NACK of 1-bit HARQ, scheduling request (SR) may be present or not present |
| Format 1b | QPSK | 2 | ACK/NACK of 2-bit HARQ, scheduling request (SR) may be present or not present |
| Format 2 | QPSK | 20 | In case of extended CP, CSI and 1-bit or 2-bit HARQ ACK/NACK |
| Format 2a | QPSK+BPS K | 21 | CSI and 1-bit HARQ ACK/NACK |
| Format 2b | QPSK+BPS K | 22 | CSI and 2-bit HARQ ACK/NACK |
| Format 3 | QPSK | 48 | Multiple ACKs/NACKs, CSI, and scheduling request (SR) may be present or not present |

Each PUCCH format is transmitted while being mapped to a PUCCH region. For example, the PUCCH format 2/2a/2b is transmitted while being mapped to resource blocks (m = 0 and 1) of band edges assigned to the UE. A mixed PUCCH RB may be transmitted while being mapped to a resource block (e.g., m = 2) adjacent to the resource block to which the PUCCH format 2/2a/2b is assigned in a central direction of the band. The PUCCH format 1/1a/1b in which the SR and the ACK/NACK are transmitted may be disposed in a resource block in which m = 4 or m = 5. The number $(N(2)RB)$ of resource blocks which may be used in the PUCCH format 2/2a/2b in which the CQI is transmitted may be indicated to the UE through a broadcasted signal.

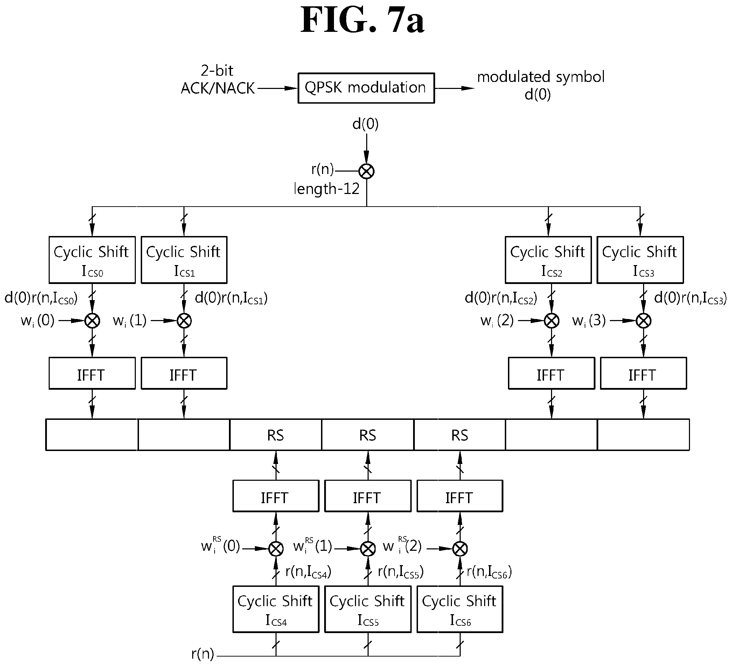

**FIG. 7a illustrates a channel structure of PUCCH format 1b in a normal CP.**

One slot includes 7 OFDM symbols, 3 OFDM symbols become OFDM symbol for a reference signal for demodulation, that is, a demodulation reference signal (DMRS), and 4 OFDM symbols become a data OFDM symbol for an ACK/NACK signal.

In the PUCCH format 1b, an encoded 2-bit ACK/NACK signal is quadrature phase shift keying (QPSK)-modulated to generate modulation symbol $d(0)$.

A cyclic shift index $I_{cs}$ may vary depending on a slot number $n_s$ and/or a slot symbol index 1 in the radio frame.

In a normal CP, since 4 data OFDM symbols exist in one slot in order to transmit the ACK/NACK signal, cyclic shift indexes corresponding to respective data OFDM symbols are set as $I_{cs0}$, $I_{cs1}$, $1_{cs2}$, and $I_{cs3}$.

The modulation symbol $d(0)$ is spread to a cyclic shifted sequence $r(n,I_{cs})$. When a ID spread sequence corresponding to an (i+1)-th OFDM symbol in the slot is $m(i)$,
the ID spread sequence may be expressed as $\{m(0), m(1), m(2), m(3)\} = \{d(0)r(n,I_{cs0}), d(0)r(n,I_{cs1}), d(0)r(n,I_{cs2}), d(0)r(n,I_{cs3})\}$.

In order to increase a UE capacity, the ID spread sequence may be spread by using an orthogonal sequence. The following sequence is used as an orthogonal $w_i(k)$ (i represents a sequence index, $0 \leq k \leq K - 1$) in which a spreading factor K is 4.

**[Table 2]**

| Index (i) | K=4 | K=3 |
|---|---|---|
| | [ $w_i(0)$, $w_i(1)$, $w_j(2)$, $w_j(3)$] | [ $w_i(0)$, $w_i(1)$, $w_i(2)$ ] |
| 0 | [+1, +1, +1, +1] | [+1, +1, +1] |
| 1 | [+ 1, -1, +1, -1] | [+1, $e^{j2\pi/3}$, $e^{j4\pi/3}$ ] |
| 2 | [+1, -1, -1, +1] | [+1, $e^{j4\pi/3}$, $e^{j2\pi/3}$ ] |

Different spreading factors may be used for each slot.

Therefore, when a predetermined orthogonal sequence index i is given, 2D spread sequences {s(0), s(1), s(2), s(3)} may be expressed as follows.

{s(0), s(1), s(2), s(3)}={$w_i(0)m(0)$, $w_i(1)m(1)$, $w_i(2)m(2)$, $w_i(3)m(3)$}

The 2D spread sequences {s(0), s(1), s(2), s(3)} are transmitted in corresponding OFDM symbols after inverse fast Fourier transform (IFFT) is performed. As a result, the ACK/NACK signal is transmitted onto the PUCCH.

The reference signal of the PUCCH format 1b is transmitted by cyclic-shifting a base sequence r(n) and thereafter, spreading the cyclic-shifted sequence r(n) to the orthogonal sequence. When cyclic shift indexes corresponding to 3 RS OFDM symbols are $I_{cs4}$, $I_{cs5}$, and $I_{cs6}$, 3 cyclic-shifted sequences $r(n,I_{cs4})$, $r(n,I_{cs5})$, and $r(n,I_{cs6})$ may be acquired. 3 cyclic-shifted sequences are spread to an orthogonal sequence $w^{RS}_i(k)$ in which K = 3.

An orthogonal sequence index i, a cyclic shift index $I_{cs}$, and a resource block index m are parameters required for configuring the PUCCH and resources used to distinguish the PUCCH (alternatively, UE). When the number of available cyclic shifts is 12 and the number of available orthogonal sequence indexes is 3, the PUCCHs for a total of 36 UEs may be multiplexed to one resource block.

In the 3GPP LTE, a resource index $n^{(1)}_{PUCCH}$ is defined in order for the UE to acquire 3 parameters for configuring the PUCCH. The resource index is defined as $n^{(1)}_{PUCCH} = n_{CCE}+N^{(1)}_{PUCCH}$, and $n_{CCE}$ represents a number of a first CCE used for transmitting a corresponding PDCCH (that is, a PDCCH including downlink resource allocation (DCI) to schedule downlink data corresponding to the ACK/NACK signal) and $N^{(I)}_{PUCCH}$ represents a parameter which the base station announces to the UE as a higher layer message.

Time, frequency, and code resources used for transmitting the ACK/NACK signal are referred to as an ACK/NACK resource or a PUCCH resource. As described above, an index (an ACK/NACK resource index or a PUCCH index) of the ACK/NACK resource required to transmit the ACK/NACK signal onto the PUCCH may be expressed as at least any one of the orthogonal sequence index i, the cyclic shift index $I_{cs}$, the resource block index m, and an index for acquiring the three indexes. The ACK/NACK resource may include at least any one of the orthogonal sequence, the cyclic shift, the resource block, and a combination thereof.

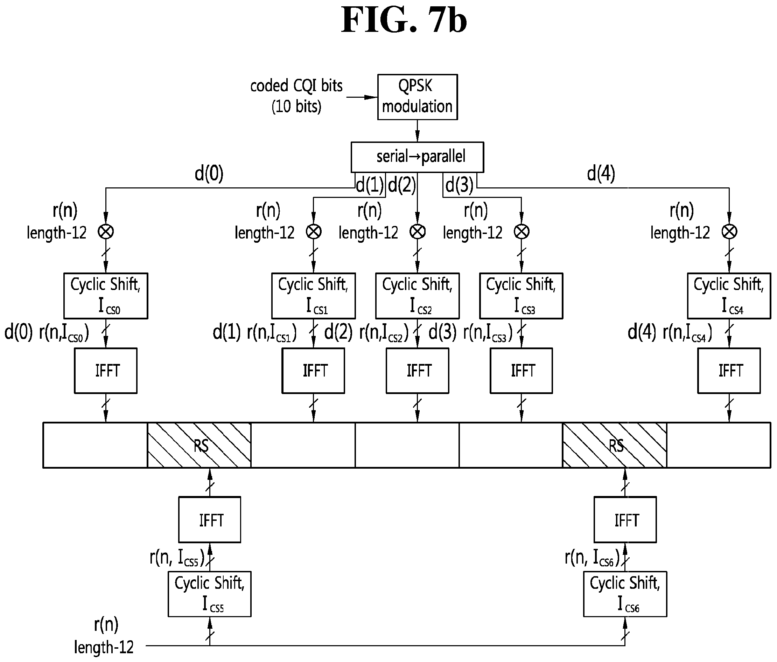

FIG. 7b illustrates a channel structure of PUCCH format 2/2a/2b in the normal CP.

Referring to FIG. 7b, OFDM symbols 1 and 5 (that is, second and sixth OFDM symbols) are used for the reference signal (DMRS) for demodulation and residual OFDM symbols are used for CQI transmission in the normal CP. In an extended CP, OFDM symbol 3 (a fourth symbol) is used for the DMRS.

10 CQI bits are channel-coded at, for example, 1/2 code rate to become 20 coded bits. A Reed-Muller code may be used in the channel coding. In addition, the Reed-Muller code is scrambled and thereafter, constellation-mapped, and as a result, a QPSK modulation symbol is generated (d(0) to d(4) in slot 0). Each QPSK modulation symbol is modulated by cyclic shift of the basic RS sequence r(n) having a length of 12 and subjected to the IFFT to be transmitted in 10 respective SC-FDMA symbols in the subframe. 12 cyclic shifts which are spaced apart from each other allow 12 different UEs to be orthogonally multiplexed in the same PUCCH resource block. The basic RS sequence r(n) may be used as RS sequences applied to OFDM symbols 1 and 5.

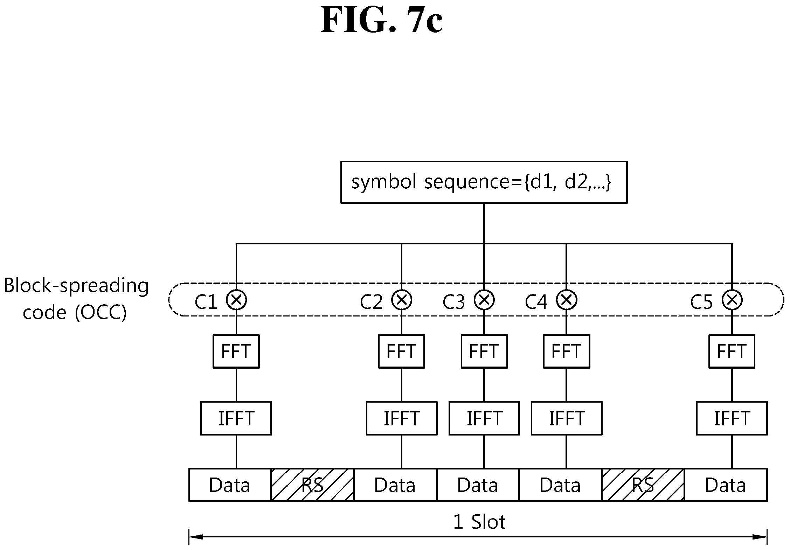

FIG. 7c illustrates the channel structure of PUCCH format 3.

Referring to FIG. 7c, PUCCH format 3 is a PUCCH format using a block spreading technique. The block spreading technique means a method that spreads a symbol sequence in which multi-bit ACK/NACK is a time domain by using a block spreading code.

In the PUCCH format 3, the symbol sequence (e.g., an ACK/NACK symbol sequence) is spread and transmitted in the time domain by the block spreading code. An orthogonal cover code (OCC) may be used as the block spreading code. Control signals of multiple UEs may be multiplexed by the block spreading code. The PUCCH format 2 is different from the PUCCH format 3 in that in PUCCH format 2, symbols (e.g., d(0), d(1), d(2), d(3), d(4), etc., of FIG. 7b) transmitted in the respective data symbols are different from each other and UE multiplexing is performed by using the cyclic shift of a constant amplitude zero auto-correlation (CAZAC) sequence, while in the PUCCH format 3, the symbol sequence constituted by one or more symbols is transmitted throughout a frequency domain of each data symbol and spread in the time domain by the block spreading code to perform the UE multiplexing. In FIG. 7c, a case where 2 DMRS symbols are used in one slot is illustrated, but the present invention is not limited thereto and 3 DMRS symbols may be used and the orthogonal cover code having 4 as the spread factor may be used. The DMRS symbol may be generated from the CAZAC sequence having a specific cyclic shift and transmitted in a manner that a plurality of DMRS symbols of the time domain is multiplied by a specific orthogonal cover code.

**<Uplink reference signal>**

Hereinafter, an uplink reference signal will be described.

The reference signal is generally transported in sequence. As the sequence of the reference signal, a predetermined sequence may be used without a particular limit. As the reference signal sequence, a sequence (PSK-based computer generated sequence) generated through a phase shift keying (PSK) based computer may be used. Examples of the PSK include binary phase shift keying (BPSK), quadrature phase shift keying (QPSK), and the like. Alternatively, as the reference signal sequence, a constant amplitude zero auto-correlation (CAZAC) sequence may be used. Examples of the CAZAC sequence include a zadoff-chu (ZC) based sequence, a ZC sequence with cyclic extension, a ZC sequence with truncation, and the like. Alternatively, as the reference signal sequence, a pseudo-random (PN) sequence may be used. Examples of the PN sequence include an m-sequence, a sequence generated through the computer, a gold sequence, a Kasami sequence, and the like. Further, as the reference signal sequence, a cyclically shifted sequence may be used.

The uplink reference signal may be divided into the demodulation reference signal (DMRS) and the sounding reference signal (SRS). The DMRS is a reference signal used in the channel estimation for demodulating a received signal. The DMRS may be associated with transmission of a PUSCH or PUCCH. The SRS is a reference signal which the terminal transmits to a base station for uplink scheduling. The base station estimates an uplink channel through the received sounding reference signal and uses the estimated uplink channel in the uplink scheduling. The SRS is not associated with transmission of the PUSCH or PUCCH. The same type of base sequence may be used for the DMRS and the SRS. Meanwhile, precoding applied to the DMRS in uplink multi-antenna transmission may be the same as precoding applied to the PUSCH. Cyclic shift separation is a primary scheme that multiplexes the DMRS. In the 3GPP LTE-A system, the SRS may not be precoded and further, may an antenna specific reference signal.

The reference signal sequence $r_{u,v}^{(\alpha)}(n)$ may be defined based on a base sequence $b_{u,v}(n)$ and a cyclic shift $\alpha$ by an equation given below.

[Equation 1]

$$r_{u,v}^{(\alpha)}(n) = e^{j\alpha n} b_{u,v}(n), \quad 0 \le n < M_{sc}^{RS}$$

In Equation 1, $M_{sc}^{RS} = m*N_{sc}^{RB}$ ($1 \le m \le N_{RB}^{max,UL}$) represents the length of the reference signal sequence. $N_{sc}^{RB}$ represents the size of a resource block represented by the number of subcarriers in the frequency domain and $N_{RB}^{max,UL}$ represents a maximum value of an uplink bandwidth represented by the multiple of $N_{sc}^{RB}$. A plurality of reference signal sequences may be defined by differently applying $\alpha$ which is the cyclic shift value from one base sequence.

The base sequence $b_{u,v}(n)$ is divided into a plurality of groups and in this case, $u \in \{0,1,...,29\}$ represents a group number and v represents a base sequence number in a group. The base sequence depends on the length ($M_{sc}^{RS}$) of the base sequence. Each group includes one base sequence (v = 0) in which the length is $M_{sc}^{RS}$ with respect to m of $1 \le m \le 5$ and includes two base sequences (v = 0, 1) in which the length is $M_{sc}^{RS}$ with respect to m of $6 \le m \le n_{RB}^{max,UL}$. A sequence group number u and a base sequence number v in the group may vary depending on a time like group hopping or sequence hopping.

When the length of the reference signal sequence is $3N_{sc}^{RB}$ or more, the base sequence may be defined by an equation given below.

[Equation 2]

$$b_{u,v}(n) = x_q(n \bmod N_{ZC}^{RS}), \quad 0 \le n < M_{sc}^{RS}$$

In the above equation, q represents a root index of a Zadoff-Chu (ZC) sequence. $N_{ZC}^{RS}$ represent the length of the ZC sequence may be given as a prime number smaller than $M_{sc}^{RS}$. The ZC sequence having the root index of q may be defined by Equation 4.

[Equation 3]

$$x_q(m) = e^{-j\frac{\pi q m(m+1)}{N_{ZC}^{RS}}}, \quad 0 \le m \le N_{ZC}^{RS} - 1$$

In the above equation, q may be given by an equation given below.

[Equation 4]

$$q = \left\lfloor \bar{q} + 1/2 \right\rfloor + v \cdot (-1)^{\left\lfloor 2\bar{q} \right\rfloor}$$

$$\bar{q} = N_{ZC}^{RS} \cdot (u+1)/31$$

When the length of the reference signal sequence is $3N_{sc}^{RB}$ or less, the base sequence may be defined by an equation given below.

[Equation 5]

$$b_{u,v}(n) = e^{j\phi(n)\pi/4}, \quad 0 \le n \le M_{sc}^{RS} - 1$$

A table given below shows an example in which $\varphi(n)$ is defined when $M_{sc}^{RS} = N_{sc}^{RB}$.

[Table 3]

|    | $\varphi(0),...,\varphi(11)$ |
|----|------------------------------|
| 0  | -1 1 3 -3 3 3 1 1 3 1 -3 3 |
| 1  | 1 1 3 3 3 -1 1 -3 -3 1 -3 3 |
| 2  | 1 1 -3 -3 -3 -1 -3 -3 1 -3 1 -1 |
| 3  | -1 1 1 1 1 -1 -3 -3 1 -3 3 -1 |
| 4  | -1 3 1 -1 1 -1 -3 -1 1 -1 1 3 |
| 5  | 1 -3 3 -1 -1 1 1 -1 -1 3 -3 1 |
| 6  | -1 3 -3 -3 -3 3 1 -1 3 3 -3 1 |
| 7  | -3 -1 -1 -1 1 -3 3 -1 1 -3 3 1 |
| 8  | 1 -3 3 1 -1 -1 -1 1 1 3 -1 1 |
| 9  | 1 -3 -1 3 3 -1 -3 1 1 1 1 1 |
| 10 | -1 3 -1 1 1 -3 -3 -1 -3 -3 3 -1 |
| 11 | 3 1 -1 -1 3 3 -3 1 3 1 3 3 |
| 12 | 1 -3 1 1 -3 1 1 1 -3 -3 -3 1 |
| 13 | 3 3 -3 3 -3 1 1 3 -1 -3 3 3 |
| 14 | -3 1 -1 -3 -1 3 1 3 3 3 -1 1 |
| 15 | 3 -1 1 -3 -1 -1 1 1 3 1 -1 -3 |
| 16 | 1 3 1 -1 1 3 3 3 -1 -1 3 -1 |
| 17 | -3 1 1 3 -3 3 -3 -3 3 3 1 3 -1 |
| 18 | -3 3 1 1 -3 1 -3 -3 -1 -1 1 -3 |
| 19 | -1 3 1 3 1 -1 -1 3 -3 -1 -3 -1 |
| 20 | -1 -3 1 1 1 1 3 1 -1 1 -3 -1 |
| 21 | -1 3 -1 1 -3 -3 -3 -3 -3 1 -1 -3 |
| 22 | 1 1 -3 -3 -3 -3 -1 3 -3 1 -3 3 |
| 23 | 1 1 -1 -3 -1 -3 1 -1 1 3 -1 1 |
| 24 | 1 1 3 1 3 3 -1 1 -1 -3 -3 1 |
| 25 | 1 -3 3 3 1 3 3 1 -3 -1 -1 3 |

(continued)

|  | $\varphi(0),...,\varphi(11)$ |
|---|---|
| 26 | 1 3 -3 -3 3 -3 1 -1 -1 3 -1 -3 |
| 27 | -3 -1 -3 -1 -3 3 1 -1 1 3 -3 -3 |
| 28 | -1 3 -3 3 -1 3 3 -3 3 3 -1 -1 |
| 29 | 3 -3 -3 -1 -1 -3 -1 3 -3 3 1 -1 |

A table given below shows an example in which $\varphi(n)$ is defined when $M_{sc}^{RS}=2*N_{SC}^{RB}$.

[Table 4]

|  | $\varphi(0),...,\varphi(23)$ |
|---|---|
| 0 | -1 3 1 -3 3 -1 1 3 -3 3 1 3 -3 3 1 1 -1 1 3 -3 3 -3 -1 -3 |
| 1 | -3 3 -3 -3 -3 1 -3 -3 3 -1 1 1 1 3 1 -1 3 -3 -3 1 3 1 1 -3 |
| 2 | 3 -1 3 3 1 1 -3 3 3 3 3 1 -1 3 -1 1 1 -1 -3 -1 -1 1 3 3 |
| 3 | -1 -3 1 1 3 -3 1 1 -3 -1 -1 1 3 1 3 1 -1 3 1 1 -3 -1 -3 -1 |
| 4 | -1 -1 -1 -3 -3 -1 1 1 3 3 -1 3 -1 1 -1 -3 1 -1 -3 -3 1 -3 -1 -1 |
| 5 | -3 1 1 3 -1 1 3 1 -3 1 -3 1 1 -1 -1 3 -1 -3 3 -3 -3 -3 1 1 |
| 6 | 1 1 -1 -1 3 -3 -3 3 -3 1 -1 -1 1 -1 1 1 -1 -3 -1 1 -1 3 -1 -3 |
| 7 | -3 3 3 -1 -1 -3 -1 3 1 3 1 3 1 1 -1 3 1 -1 1 3 -3 -1 -1 1 |
| 8 | -3 1 3 -3 1 -1 -3 3 -3 3 -1 -1 -1 -1 1 -3 -3 -3 1 -3 -3 -3 1 -3 |
| 9 | 1 1 -3 3 3 -1 -3 -1 3 -3 3 3 3 -1 1 1 -3 1 -1 1 1 -3 1 1 |
| 10 | -1 1 -3 -3 3 -1 3 -1 -1 -3 -3 -3 -1 -3 -3 1 -1 1 3 3 -1 -1 -1 3 |
| 11 | 1 3 3 -3 -3 1 3 1 -1 -3 -3 -3 3 3 -3 3 3 -1 -3 3 -1 1 -3 1 |
| 12 | 1 3 3 1 1 1 -1 -1 1 -3 3 -1 1 1 -3 3 3 -1 -3 3 -3 -1 -3 -1 |
| 13 | 3 -1 -1 -1 -1 -3 -1 3 3 1 -1 1 3 3 3 -1 1 1 -3 1 3 -1 -3 3 |
| 14 | -3 -3 3 1 3 1 -3 3 1 3 1 1 3 3 -1 -1 -3 1 -3 -1 3 1 1 3 |
| 15 | -1 -1 1 -3 1 3 -3 1 -1 -3 -1 3 1 3 1 -1 -3 -3 -1 -1 -3 -3 -3 -1 |
| 16 | -1 -3 3 -1 -1 -1 -1 1 1 -3 3 1 3 3 1 -1 1 -3 1 -3 1 1 -3 -1 |
| 17 | 1 3 -1 3 3 -1 -3 1 -1 -3 3 3 3 -1 1 1 3 -1 -3 -1 3 -1 -1 -1 |
| 18 | 1 1 1 1 1 -1 3 -1 -3 1 1 3 -3 1 -3 -1 1 1 -3 -3 3 1 1 -3 |
| 19 | 1 3 3 1 -1 -3 3 -1 3 3 3 -3 1 -1 1 -1 -3 -1 1 3 -1 3 -3 -3 |
| 20 | -1 -3 3 -3 -3 -3 -1 -1 -3 -1 -3 3 1 3 -3 -1 3 -1 1 -1 3 -3 1 -1 |
| 21 | -3 -3 1 1 -1 1 -1 1 -1 3 1 -3 -1 1 -1 1 -1 -1 3 3 -3 -1 1 -3 |
| 22 | -3 -1 -3 3 1 -1 -3 -1 -3 -3 3 -3 3 -3 -1 1 3 1 -3 1 3 3 -1 -3 |
| 23 | -1 -1 -1 -1 3 3 3 1 3 3 -3 1 3 -1 3 -1 3 3 -3 3 1 -1 3 3 |
| 24 | 1 -1 3 3 -1 -3 3 -3 -1 -1 3 -1 3 -1 -1 1 1 1 1 -1 -1 -3 -1 3 |
| 25 | 1 -1 1 -1 3 -1 3 1 1 -1 -1 -3 1 1 -3 1 3 -3 1 1 -3 -3 -1 -1 |
| 26 | -3 -1 1 3 1 1 -3 -1 -1 -3 3 -3 3 1 -3 3 -3 1 -1 1 -3 1 1 1 |
| 27 | -1 -3 3 3 1 1 3 -1 -3 -1 -1 -1 3 1 -3 -3 1 3 -3 -1 -3 -1 -3 -1 |
| 28 | -1 -3 -1 -1 1 1 -3 -1 -1 1 -1 -3 1 1 -3 1 -3 -3 3 1 1 -1 3 -1 -1 |
| 29 | 1 1 -1 -1 -3 -1 3 -1 3 -1 1 3 1 -1 3 1 3 -3 -3 1 -1 -1 1 3 |

Hopping of the reference signal may be applied as described below.

A sequence group number u of slot $n_s$ may be defined based on a group hopping pattern $f_{gh}(n_s)$ and a sequence shift pattern $f_{ss}$ by an equation given below.

[Equation 6]

$$u = \left( f_{gh}(n_s) + f_{ss} \right) \bmod 30$$

17 different group hopping patterns and 30 different sequence shift patterns may exist. Group hopping may be applied or not applied by a group-hopping-enabled parameter which is a cell specific parameter provided by the higher layer. Further, the group hopping for the PUSCH may not be applied to specific UE by a disable-sequence-group-hopping parameter which is a UE specific parameter. The PUCCH and the PUSCH may have the same group hopping pattern and different sequence shift patterns.

The group hopping pattern $f_{gh}(n_s)$ is the same with respect to the PUSCH and the PUCCH and may be defined by an equation given below.

[Equation 7]

$$f_{gh}(n_s) = \begin{cases} 0 & \text{if group hopping is disabled} \\ \left( \sum_{i=0}^{7} c(8n_s + i) \cdot 2^i \right) \bmod 30 & \text{if group hopping is enabled} \end{cases}$$

In the above equation, c(i) as an imitation pseudo-random sequence which is a PN sequence may be defined by a gold sequence having a length of -31. An equation given below shows one example of the gold sequence c(n).

[Equation 8]

$$c(n) = (x_1(n + N_c) + x_2(n + N_c)) \bmod 2$$

$$x_1(n + 31) = (x_1(n + 3) + x_1(n)) \bmod 2$$

$$x_2(n + 31) = (x_2(n + 3) + x_2(n + 2) + x_1(n + 1) + x_1(n)) \bmod 2$$

Herein, Nc = 1600, $x_1(i)$ represents a 1 m-th sequence, and $x_2(i)$ represents a 2 m-th sequence. The imitation

$$c_{init} = \left\lfloor \frac{N_{ID}^{cell}}{30} \right\rfloor$$

pseudo-number sequence generator may be initialized to ⌊ ... ⌋ at the beginning of each radio frame.

Definition of the sequence shift pattern $f_{ss}$ may be different with respect to the PUCCH and the PUSCH. The sequence shift pattern of the PUCCH may be given as $f_{ss}^{PUCCH} = N_{ID}^{cell} \bmod 30$. The sequence shift pattern of the PUSCH may be given as $f_{ss}^{PUSCH} = (f_{ss}^{PUCCH} + \Delta_{ss}) \bmod 30$ and $\Delta_{ss} \in \{0,1,...,29\}$ may be configured by the higher layer.

The sequence hopping may be applied only to a reference signal sequence having a length longer than $6N_{sc}^{RB}$. With respect to a reference signal sequence having a length shorter than $6N_{sc}^{RB}$, the base sequence number is given as v = 0 in the base sequence group. With respect to the reference signal sequence having the length longer than $6N_{sc}^{RB}$, the base sequence number v in the base sequence group in slot $n_s$ may be defined by Equation 10.

[Equation 9]

$$v = \begin{cases} c(n_s) & \text{if group hopping is disabled and sequence hopping is enabled} \\ 0 & \text{otherwise} \end{cases}$$

c(i) may be expressed by an example of Equation 8 given above. The sequence hopping may be applied or not applied by a sequence-hopping-enabled parameter which is a cell specific parameter provided by the higher layer. Further, the sequence hopping for the PUSCH may not be applied to specific UE by the disable-sequence-group-hopping parameter which is the UE specific parameter. The imitation pseudo-number sequence generator may be initialized to

$$c_{init} = \left\lfloor \frac{N_{ID}^{cell}}{30} \right\rfloor \cdot 2^5 + f_{ss}^{PUSCH}$$

at the beginning of each radio frame.

A PUSCH DMRS sequence $r_{PUSCH}^{(\lambda)}(.)$ depending on a layer $\lambda(0,1,...,\gamma-1)$ may be defined by Equation 11.

[Equation 10]

$$r_{PUSCH}^{(\lambda)}\left(m \cdot M_{sc}^{RS} + n\right) = w^{(\lambda)}(m) r_{u,v}^{(\alpha_\lambda)}(n)$$

In the above equation, m=0,1,... and n=0,...,$M_{sc}^{RS}$-1. $M_{sc}^{RS} = M_{sc}^{PUSCH}$. An orthogonal sequence $w^{(\lambda)}(m)$ may be determined according to a table to be described below.

In the slot $n_s$, the cyclic shift may be given as $\alpha = 2\pi n_{cs}/12$ and $n_{cs}$ may be defined by an equation given below.

[Equation 11]

$$n_{cs,\lambda} = \left(n_{DMRS}^{(1)} + n_{DMRS,\lambda}^{(2)} + n_{PN}(n_s)\right) \bmod 12$$

In the above equation, $n_{DMRS}^{(1)}$ may be determined according to a cyclicShift parameter provided by the higher layer. A table given below shows an example of $n_{DMRS}^{(1)}$ determined according to the cyclicShift parameter.

[Table 5]

| Parameter | $n_{DMRS}^{(1)}$ |
|---|---|
| 0 | 0 |
| 1 | 2 |
| 2 | 3 |
| 3 | 4 |
| 4 | 6 |
| 5 | 8 |
| 6 | 9 |
| 7 | 10 |

Referring back to the above equation, $n_{DMRS,\lambda}^{(2)}$ may be determined by a DMRS cyclic shift field in DCI format 0 for the transport block depending on corresponding PUSCH transmission. A table given below shows an example of $n_{DMPS,\lambda}^{(2)}$ determined according to DMRS cyclic shift field.

[Table 6]

| | $n_{DMRS,\lambda}^{(2)}$ | | | | $[W^{(\lambda)}(0)\ W^{(\lambda)}(1)]$ | | | |
|---|---|---|---|---|---|---|---|---|
| DMRS cyclic shift field | $\lambda=0$ | $\lambda=1$ | $\lambda=2$ | $\lambda=3$ | $\lambda=0$ | $\lambda=1$ | $\lambda=2$ | $\lambda=3$ |
| 000 | 0 | 6 | 3 | 9 | [1 1] | [1 1] | [1 -1] | [1 -1] |
| 001 | 6 | 0 | 9 | 3 | [1 -1] | [1 -1] | [1 1] | [1 1] |
| 010 | 3 | 9 | 6 | 0 | [1 -1] | [1 -1] | [1 1] | [1 1] |
| 011 | 4 | 10 | 7 | 1 | [1 1] | [1 1] | [1 1] | [1 1] |

(continued)

| DMRS cyclic shift field | $n^{(2)}_{DMRS,\lambda}$ | | | | $[W^{(\lambda)}(0)\ W^{(\lambda)}(1)]$ | | | |
| | $\lambda=0$ | $\lambda=1$ | $\lambda=2$ | $\lambda=3$ | $\lambda=0$ | $\lambda=1$ | $\lambda=2$ | $\lambda=3$ |
| --- | --- | --- | --- | --- | --- | --- | --- | --- |
| 100 | 2 | 8 | 5 | 11 | [1 1] | [1 1] | [1 1] | [1 1] |
| 101 | 8 | 2 | 11 | 5 | [1- 1] | [1 -1] | [1 -1] | [1 -1] |
| 110 | 10 | 4 | 1 | 7 | [1 -1] | [1 -1] | [1 -1] | [1 -1] |
| 111 | 9 | 3 | 0 | 6 | [1 1] | [1 1] | [1 -1] | [1-1] |

$n_{PN}(n_s)$ may be defined by an equation given below.

[Equation 12]

$$n_{PN}(n_s) = \sum_{i=0}^{7} c(8N_{symb}^{UL} \cdot n_s + i) \cdot 2^i$$

c(i) may be expressed by the example of Equation 8 given above and applied for each cell of c(i). The imitation

$$c_{init} = \left\lfloor \frac{N_{ID}^{cell}}{30} \right\rfloor \cdot 2^5 + f_{ss}^{PUSCH}$$

pseudo-number sequence generator may be initialized to                                        at the beginning of each radio frame.

The vector of the reference signal may be precoded by an equation given below.

[Equation 13]

$$\begin{bmatrix} \tilde{r}_{PUSCH}^{(0)} \\ \vdots \\ \tilde{r}_{PUSCH}^{(P-1)} \end{bmatrix} = W \begin{bmatrix} r_{PUSCH}^{(0)} \\ \vdots \\ r_{PUSCH}^{(v-1)} \end{bmatrix}$$

In the above equation, P represents the number of antenna ports used for the PUSCH transmission. W represents a precoding matrix. With respect to the PUSCH transmission using the single antenna port, P = 1, W = 1, and $\gamma$ = 1. Further, with respect to spatial multiplexing, P = 2 or 4.

With respect to each antenna port used for the PUSCH transmission, the DMRS sequence is multiplied by an amplitude scaling factor $\beta$PUSCH and sequentially mapped to the resource block. A set of physical resource blocks used for the mapping is the same as the set of physical resource blocks used for the PUSCH transmission. In the subframe, the DMRS sequence may be first mapped to the resource element in a direction in which the DMRS sequence increases in the frequency domain and thereafter, in a direction in which the slot number increases. The DMRS sequence may be mapped to a fourth SC-FDMA symbol (SC-FDMA symbol 3) in the case of the normal CP and a third SC-FDMA symbol (SC-FDMA symbol 2) in the case of the extension CP.

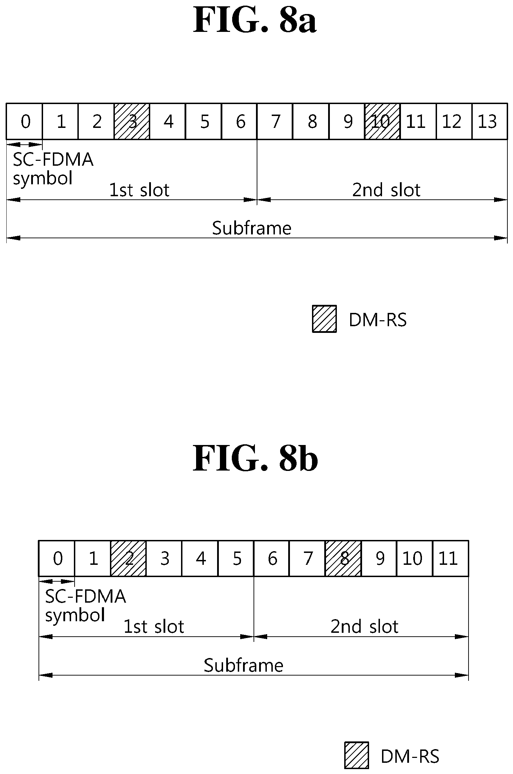

**FIGS. 8a and 8b are one example of a subframe in which a DMRS for a PUSCH is transmitted.**

The structure of the subframe in FIG. 8a shows a case of the normal CP. The subframe includes the first slot and the second slot. Each of the first slot and the second slot includes 7 SC-FDMA symbols. Symbol indexes of 0 to 13 are granted to 14 SC-FDMA symbols in the subframe. The reference signal may be transmitted through the SC-FDMA symbols having symbol indexes 3 and 10. The reference signal may be transmitted by using the sequence. The Zadoff-Chu (ZC) sequence may be used as the reference signal sequence and various ZC sequences may be generated according to a root index and a cyclic shift value. The base station allocates different cyclic shift values to the terminal to estimate channels of a plurality of terminals through an orthogonal sequence or quasi-orthogonal sequence. Locations of the frequency domains occupied by the reference signal may be the same as each other or different from each other in two slots in the subframe. In two slots, the same reference signal sequence is used. Data may be transmitted through the residual symbols other than the SC-FDMA symbol in which the reference signal is transmitted.

The structure of the subframe in FIG. 8b shows a case of the extension CP. The subframe includes the first slot and the second slot. Each of the first slot and the second slot includes 6 SC-FDMA symbols. Symbol indexes of 0 to 11 are granted to 12 SC-FDMA symbols in the subframe. The reference signal is transmitted through the SC-FDMA symbols having symbol indexes 2 and 8. The data is transmitted through the residual SC-FDMA symbols other than the SC-FDMA symbol in which the reference signal is transmitted.

### <Carrier aggregation>

Hereinafter, a carrier aggregation (CA) system will be described.

The carrier aggregation (CA) system means aggregating multiple component carriers (CCs). By the carrier aggregation, the existing meaning of the cell is changed. According to the carrier aggregation, the cell may mean a combination of a downlink component carrier and an uplink component carrier or a single downlink component carrier.

Further, in the carrier aggregation, the cell may be divided into a primary cell, secondary cell, and a serving cell. The primary cell means a cell that operates at a primary frequency and means a cell in which the UE performs an initial connection establishment procedure or a connection reestablishment procedure with the base station or a cell indicated by the primary cell during a handover procedure. The secondary cell means a cell that operates at a secondary frequency and once an RRC connection is established, the secondary cell is configured and is used to provide an additional radio resource.

As described above, the carrier aggregation system may support a plurality of component carriers (CC), that is, a plurality of serving cells unlike a single carrier system.

The carrier aggregation system may support cross-carrier scheduling. The cross-carrier scheduling is a scheduling method that may perform resource allocation of the PDSCH transmitted through another component carrier through the PDCCH transmitted through a specific component carrier and/or resource allocation of the PUSCH transmitted through other component carrier other than the component carrier fundamentally linked with the specific component carrier.

### <Introduction of small cell>

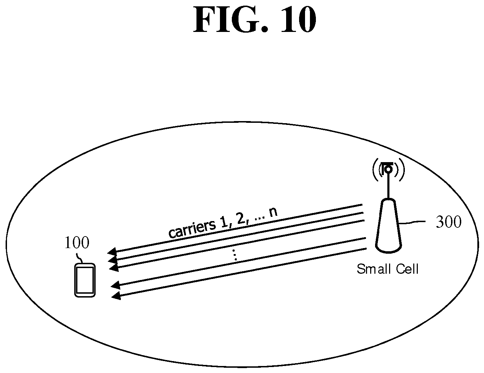

Meanwhile, in a next-generation mobile communication system, it is anticipated that a small cell having a small cell coverage radius will be added into coverage of the existing cell and it is anticipated that the small cell will process more traffic. Since the existing cell has larger than the small cell, the existing call may be called a macro cell. Hereinafter, it will be described with reference to FIG. 10.

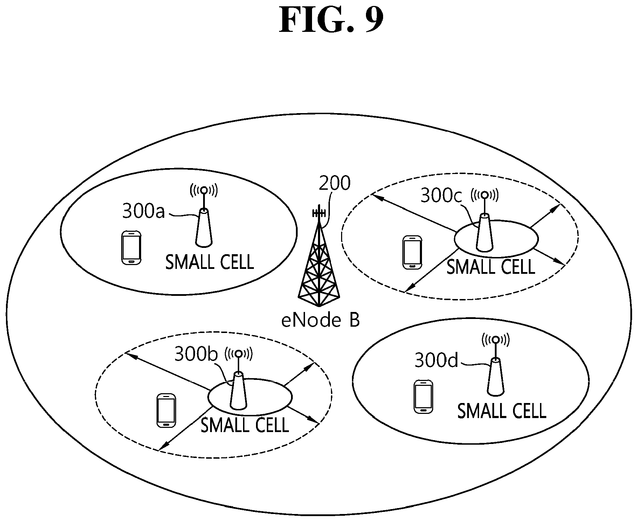

### FIG. 9 is a diagram illustrating an environment of heterogeneous networks of a macro cell and a small cell which may become a next-generation wireless communication system.

Referring to FIG. 9, a heterogeneous-network environment is shown, in which a macro cell by the existing base station 200 overlaps with a small cell by one or more small base stations 300a, 300b, 300c, and 300d. Since the existing base station provides the larger coverage than the small base station, the existing base station may be called a macro base station (macro eNodeB, or MeNB). In the present specification, terms such as the macro cell and the macro base station will be mixedly used. The UE that accesses the macro cell 200 may be referred to as macro UE. The macro UE receives a downlink signal from the macro base station and transmits an uplink signal to the macro base station.

In the heterogeneous networks, the macro cell is configured as a primary cell (Pcell) and the small cell is configured as a secondary cell (Scell) to fill a coverage gap of the macro cell. Further, the small cell is configured as the primary cell (Pcell) and the macro cell is configured as the secondary cell (Scell) to boost overall performance.

Meanwhile, the small cell may use a frequency band assigned to current LTE/LTE-A or use a higher frequency band (e.g., a band of 3.5 GHz or higher).

On the other hand, in a next LTE-A system, it is considered that the small cell may not be independently used and the small cell may be used only as a macro-assisted small cell which may be used under assistance of the macro cell.

The small cells 300a, 300b, 300c, and 300d may have similar channel environments to each other and since the small cells 300a, 300b, 300c, and 300d are positioned at distances which are proximate to each other, interference among the small cells may be a large issue.

In order to reduce an interference influence, the small cells 300b and 300c may extend or reduce coverage thereof. The extension and reduction of the coverage is referred to as cell breathing. For example, as illustrated in FIG. 9, the small cells 300b and 300c may be turned on or off according to a situation.

On the other hand, the small cell may use the frequency band assigned to the current LTE/LTE-A or use the higher frequency band (e.g., the band of 3.5 GHz or higher).

**<Enhanced carrier aggregation (eCA)> eCA>**

**FIG. 10 is an exemplary diagram illustrating a concept of eCA which may become the next-generation wireless communication system.**

In the next-generation system, in order to process downlink data which rapidly increase, it may be considered that a maximum of Y carriers may be aggregated by enhancing that only five carriers may be aggregated in the related art. 8, 16, 32, etc., may be considered as a value of the Y. Further, it may be considered that cells (for example, configured cells or activated cells) by the carrier aggregation (CA) are classified and managed.

However, when more than five cells are used according to the carrier aggregation, HARQ ACK/NACK exceeds 20 bits. However, there is a method that may transmit the HARQ ACK/NACK that exceeds 20 bits by the existing PUCCH format.

As a detailed example, when 16 cells are used according to the carrier aggregation in an FDD system, bits of the HARQ ACK/NACK are 16 bits in the case of performing spatial bundling, but a maximum of 32 bits in the case of not performing the spatial bundling. Therefore, 16 cells are used according to the carrier aggregation, but 32-bit HARQ ACK/NACK may not be transmitted by the existing PUCCH format in the case of not performing the spatial bundling. As another example, based on a case where the number (hereinafter, expressed by M) of downlink subframes corresponding to one uplink subframe in a TDD system is 4, when 16 cells are used according to the carrier aggregation and the spatial bundling is used, the HARQ ACK/NACK which the UE needs to transmit becomes 64 bits. However, when the cells are classified into two groups and a PUCCH resource is independently allocated to each cell group (CG), the HARQ ACK/NACK which the UE needs to transmit to each CG (8 cells) may be 32 bits. Since a maximum of 20 bits of HARQ ACK/NACK may be transmitted by the existing PUCCH format, the UE may not transmit the 32-bit HARQ ACK/NACK. Moreover, if the spatial bundling is not performed, the HARQ ACK/NACK becomes 128 bits or 64 bits, and as a result, the UE may transmit the HARQ ACK/NACK by the existing PUCCH format.

**<Disclosure of present specification>**

Therefore, the disclosure of the present specification has been made in an effort to present a method that solves the problem.

In detail, the present specification proposes a coding scheme and a PUCCH transmission method for the UE to transmit the UCI including the HARQ ACK/NACK when the UCI including the HARQ ACK/NACK is a maximum of 32 bits or 64 bits.

**I. Proposal of new PUCC format**

A PUCCH format (in particular, PUCCH format 3) of the existing LTE release-11 system may have information of a maximum of 32 bits as an input and when only the HARQ ACK/NACK is transmitted, a maximum of 20 bits may be transmitted, when both the HARQ ACK/NACK and the SR are transmitted, a maximum of 21 bits may be transmitted, and last, when all of the HARQ ACK/NACK, the CSI, and the SR, a maximum of 22 bits may be transmitted. The corresponding UCI is encoded to 48 bits through Reed-Muller (RM) coding (alternatively, including dual RM coding) and thereafter, mapped to 120 RE (12*5*2) based on PUCCH format 3 and transmitted. In this case, coding rate according to a coding scheme is approximately 0.458 and final coding rate according to mapping is 0.092.

Meanwhile, when the eCA is used, the number of bits of the HARQ ACK/NACK may be extended to a maximum of 32 bits or 64 bits in (8 CCs or 16 CCs per group) and in this case, it is considered that the number (e.g., 48 bits) of bits after encoding the UCI or the final number (e.g., 120 REs) of REs is extended.

As a method that changes the final number of REs, it may be considered that the number of OFDM symbols including the DMRS per slot is reduced at the time of transmitting the PUCCH. As a method that increases the number of bits after encoding, it may be considered that a degree (e.g., 5 based on PUCCH format 3) in which the number of encoded bits is repeated as large as a spreading factor is reduced by reducing the number of the existing spreading factors.

Hereinafter, an example in which the PUCCHs of multiple UEs are multiplexed in a slot in which the PUCCHs are multiplexed by using the OCC and the DMRS will be described.

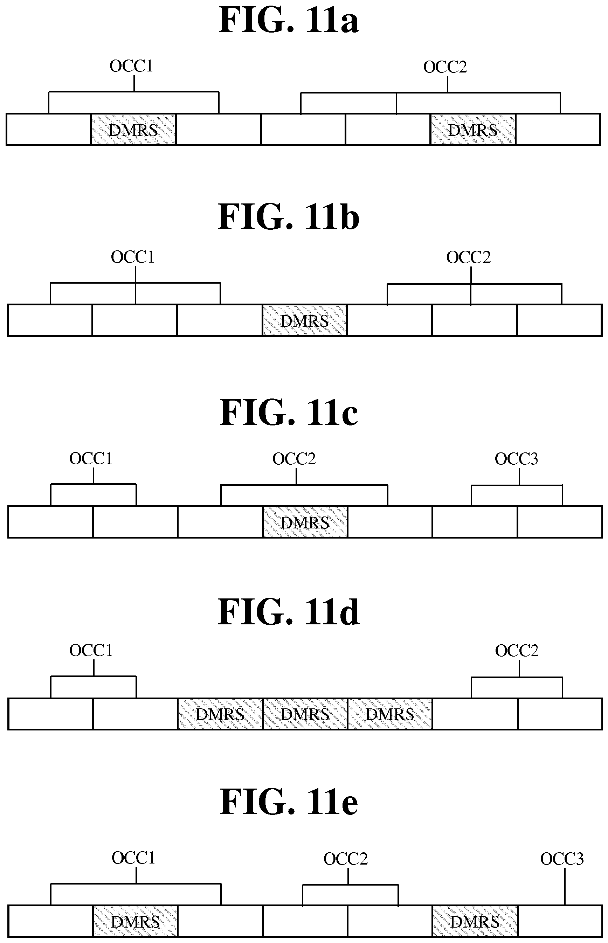

**FIGS. 11a to 11e illustrate a slot including symbols in which the PUCCHs multiplexed through the OCC and the DMRS are mapped to each other in the case of the normal CP.**

In FIGS. 11a to 11e, as a case where the normal CP is used, one slot including 7 symbols is illustrated. Although one slot in the subframe is illustrated in FIGS. 11a to 11e, the other one slot may also be similar. Unlike this, when the slot illustrated in FIGS. 11a to 11e corresponds to a first slot, a second slot may be different.

For example, the slot illustrated in FIGS. 11a to 11e may correspond to a first subframe in the subframe and a shortened PUCCH may be transmitted on a second slot in the subframe. Herein, the shortened PUCCH means that a sounding reference signal (SRS) is transmitted instead of the PUCCH in a last symbol. In this case, it may be interpreted that the last symbol of the second slot is excluded in using the OCC.

As another example, when two types of OCCs, that is, OCC1 and OCC2 are used in the first slot, it may be considered that the last symbol is used in OCC3 and OCC4 in the second slot. In a similar scheme, three types of OCCs, that is, OCC1, OCC2, and OCC3 are used in the first slot, OCC4, OCC5, and OCC6 may be used in the second slot. A detailed example is described below. In the existing PUCCH format 3, 24 bits encoded in the first slot are mapped 5 symbols and remaining encoded 24 bits are mapped to 5 OFDM symbols of the second slot. However, when the number of OCC types per slot is two, different encoded 24 bits (that is, first 24 bits and second 24 bits) may be mapped to OFDM symbols corresponding to the respective OCCs, respectively in the first slot and another encoded 24 bits (that is, third 24 bits and fourth 24 bits) may be mapped to the OFDM symbols corresponding to the respective OCCs, respectively, in the second slot. As described above, encoded 48 bits may be mapped in the existing PUCCH format, while according to the disclosure of the present specification, when two OCC types per slot are used, encoded 96 bits may be mapped and when three OCC types per slot are used, encoded 144 bits may be mapped.

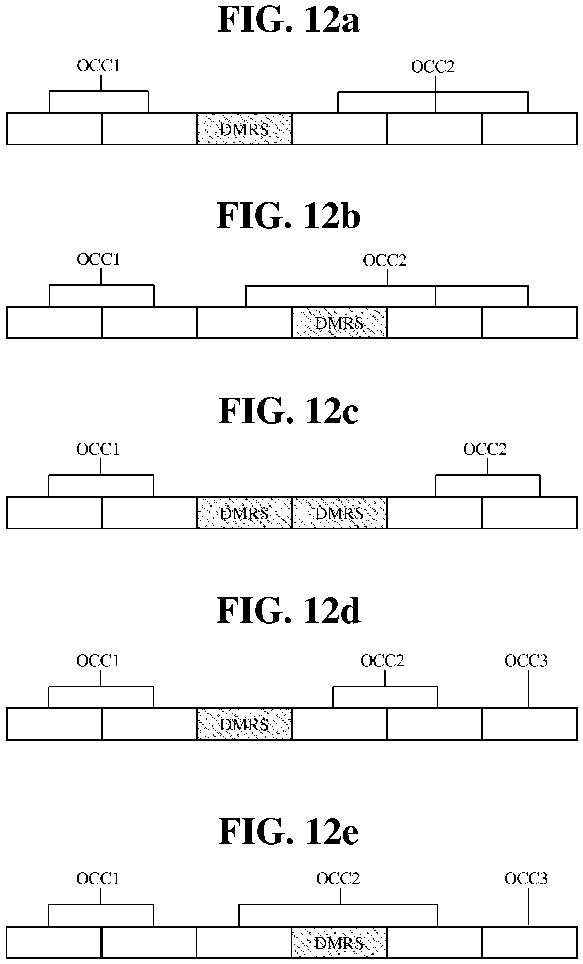

**FIGS. 12a to 12e illustrate the slot including the symbols in which the PUCCHs multiplexed through the OCC and the DMRS are mapped to each other in the case of the extended CP.**

In FIGS. 12a to 12e, as a case where the extended CP is used, one slot including 6 symbols is illustrated.

As illustrated in FIGS. 12a to 12e, in the case where the extended CP is used, the OCC may not be used in order to transmit the UCI of 64 bits. In this case, it may be considered that the OCC is at least used or the same encoding bit is repeatedly mapped in each slot or only on last two OFDM symbols based on the subframe by considering the shortened PUCCH format.

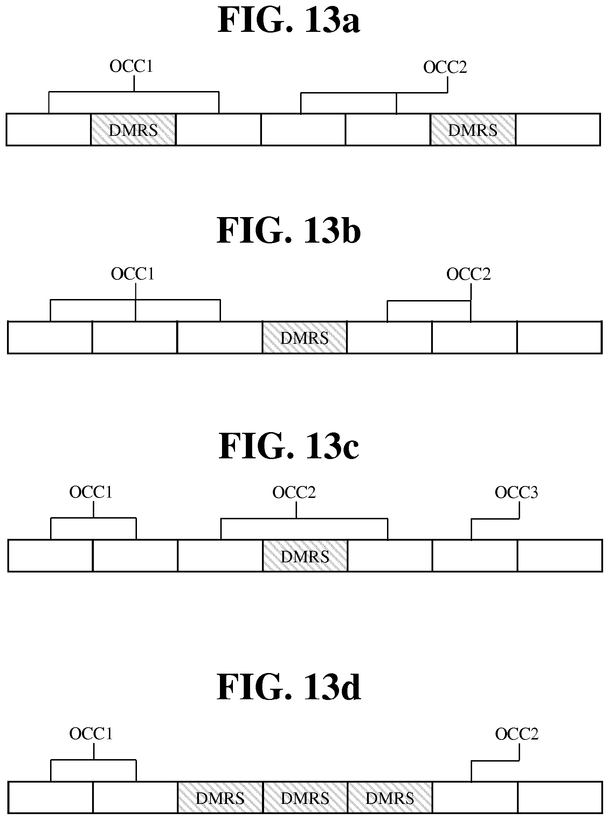

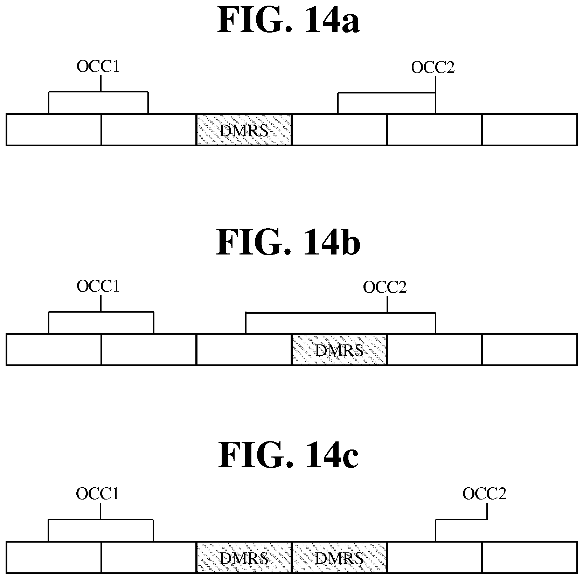

**FIGS. 13a to 13d illustrate an applied second slot in the shortened PUCCH format in the case of the extended CP. FIGS. 14a to 14c illustrate the applied second slot in the shortened PUCCH format in the case of the extended CP.**

In FIGS. 13a to 13d, as the case where the normal CP is used, one slot including 7 symbols is illustrated. In FIGS. 14a to 14c, as the case where the extended CP is used, one slot including 6 symbols is illustrated.

Since the last symbol is used for transmitting the SRS in each illustrated slot, the length of the OCC having a length of 2 decreases to 1. In this case, a plurality of PUCCHs may not be permitted to be multiplexed to the same RB (pair) and it may be considered that the OCC is not additionally applied even to another OFDM symbol. As yet another scheme, it may be considered that the number of OCCs varies for each slot. For example, in the case of the normal CP, three OCCs having the length of 2 in the first slot as illustrated in FIG. 11c and the OCC having the length of 2 and the OCC having the length of 3 may be used as illustrated in FIG. 11c in the second slot. An advantage in this case is that the plurality of PUCCHs may be multiplexed by using the OCC as illustrated in FIG. 13b when the shortened PUCCH format (that is, a format in which the PUCCH is not transmitted in the last symbol in order to transmit the SRS) is used.

In this section, contents regarding the coding scheme and the RE mapping are described as an embodiment for a case where the new format is introduced for easy description, but as another transmission scheme, the description of this section may be applied even in transmission of the PUCCH through a plurality of RBs or transmission of the PUCCH using a plurality of PUCCH resources.

**II. Next PUCCH format configuration scheme**

Since a new-format PUCCH presented in the present specification is designed with respect to a case where a UCI size (that is, bit number) is large, it may be inefficient when a value of the UCI is small. Further, since up to 5 CCs (that is, cells) may be supported by the existing PUCCH format 3, a condition that the new PUCCH format (hereinafter, referred to as PUCCH format 4) presented by the present specification is to be used needs to be designated. In particular, in the case of the FDD, when a plurality of groups and PUCCH resources are supported, a maximum of 16 bits of the HARQ ACK/NACK for a MIMO operation may be supported by using the PUCCH format 3 without the spatial bundling even though 8 CCs (that is, cells) per group are included. Even when the number of PUCCH resources is one, the HARQ ACK/NACK becomes a maximum of 16 bits in the case of supporting the spatial bundling in the FDD, and as a result, the HARQ ACK/NACK may be supported by PUCCH format 3. Next, one example of a condition to configure the new PUCCH format in the FDD is described below.

As a first example, in the case of the FDD system or in the case of PCell (alternatively, PSCell) of the FDD system, the new PUCCH format is not applied. Even when the configured cell exceeds 5, the HARQ ACK/NACK may be transmitted by using PUCCH format 3. In particular, even when the number of bits of the HARQ ACK/NACK exceeds 21 or 22 bits, the HARQ ACK/NACK may be transmitted by applying the spatial bundling to the HARQ ACK/NACK.

As a second example, the network may configure a new PUCCH format for the UE that accesses FDD UE or FDD PCell (alternatively, PScell) through the RRC. Alternatively, the network disables the spatial bundling. In this case, it is assumed that when the number of all cells or the number of cells configured in the group exceeds 5, the UE uses the new PUCCH format.

As a third example, it is assumed that when the number of all cells or the number of cells configured in the group exceeds 5, the UE uses the new PUCCH format.

When a plurality of cell groups may be configured, it may be considered that the new PUCCH format is simultaneously used with respect to all groups and it may be considered that whether to user the new PUCCH format is independently configured for each group in regard to whether to use the new PUCCH format. When the new PUCCH format is not used, it may be interpreted that PUCCH format 1a/1b or channel selection, PUCCH format 3, etc., is used according to the number of cells.

On the contrary, in the case where the TDD system or the PCell is the TDD, when the number of downlink subframes corresponding to one uplink subframe is M (e.g., M = 4, 5, 6, or 9), the number of bits of HARQ ACK/NACK is 20 in the case where the number of cells configured based on M = 4 is 5, and as a result, the number of cells which may be supported by PUCCH format 3 is limitative. Next, one example of a condition that configures the new PUCCH format in the TDD or with respect the TDD PCell (alternatively, PSCell) will be described below.

As a first example, it is assumed that when the number of all cells or the number of cells configured in the group exceeds 5, the UE uses the new PUCCH format. In the case where a TDD based cell and an FDD based cell are used by the carrier aggregation (that is, TDD-FDD CA), it may be considered that the UE uses the new PUCCH format when the number of bits of the HARQ ACK/NACK exceeds 21 or 22 bits.

As a second example, the network may configure the new PUCCH format for the UE that accesses TDD UE or TDD PCell (alternatively, PSell) through the RRC signal. Alternatively, the network disables using the spatial bundling. However, even in the case where the number of all cells or the number of cells configured in the group is 5 or less, the UE supports the new PUCCH format when the number of bits of the HARQ ACK/NACK before the spatial bundling exceeds 20 or 21. In this case, it may be considered that the spatial bundling is not performed with respect to the HARQ ACK/NACK.

When the plurality of cell groups may be configured, it may be considered that the new PUCCH format is simultaneously used with respect to all cell groups and it may be considered that whether to user the new PUCCH format is independently configured for each group. When the new PUCCH format is not used, it may be interpreted that PUCCH format 1a/1b or channel selection, PUCCH format 3, etc., is used according to the number of cells.

Further, in the TDD, the number of corresponding downlink subframes may vary according to each uplink subframe. As one example, in TDD UL configuration 3, M = 3 with respect to uplink subframe #2 and M = 2 with respect to uplink subframe #3. In regard to whether the UE uses the new PUCCH format with respect to the TDD or the TDD Pcell (alternatively, PSell), (1) it may be considered that whether the UE uses the new PUCCH format is similarly applied with respect to all uplink subframes for convenience or (2) whether the UE uses the new PUCCH format may be used independently for each uplink subframe. Such a purpose is to efficiently use the PUCCH resource according to a difference in the number of bits.

### III. Embodiment regarding application of coding scheme

First, each expression used in this section is described in order to promote appreciation.

- RM(32, A): An encoder and an encoding process that generates an encoded 32-bit output with an input that a size is A by using a (32, A) RM coding matrix,
- RM(Y, A): An encoder and an encoding process that generates the encoded 32-bit output with the input that the size is A by using the (32, A) RM coding matrix in the case of Y > 32 and finally generates an encoded Y-bit output by using circular repetition again. Further, an encoder and an encoding process that generates the encoded 32-bit output with the input that the size is A by using the (32, A) RM coding matrix in the case of Y < 32 and truncates the generated output from LSB again and finally generates the encoded Y-bit output.
- TBCC(3*A, A): An encoder and an encoding process that generates an encoded 3*A-bit output with the input that the size is A by using a TBCC having coding rate of 1/3,
- TBCC(Y, A): An encoder and an encoding process that generates the encoded 3*A-bit output with the input that the size is A by using the TBCC having coding rate of 1/3 and finally generates the encoded Y-bit output by using the circulation repetition again, on the contrary, in the case of Y < 3*A, generates the encoded 3*A-bit output with the input that the size is A by using the TBCC having coding rate of 1/3 and truncates the generated output from the LSB again or punctures the generated output with a specific pattern and finally generates the encoded Y-bit output,

- K: The number of bits of UCI (e.g., HARQ ACK/NACK),
- M: The number of bitstreams,
- N: The number of all encoded output bits after encoding the UCI (in the CG),
- L: The number of components encoders (e.g., RM encoders),
- Q: as the number of bits per symbol, 2 in the case of the QPSK and 4 in the case of the 16QAM,
- Ceil(x): A minimum integer value (appreciated that round-off is performed) which is not smaller than a value of x,
- Floor(x): A maximum integer value (appreciated that round-down is performed) which is not larger than the value of x,

Next, an embodiment for an application step is described below.

(1) The UE divides K-bit UCI (e.g., HARQ ACK/NACK) into M bitstreams. Herein, a value of M may be Ceil(K/10) or Ceil(K/11). Additionally, when the value of the Ceil(K/10) or Ceil(K/11) is odd, the value of M may be Ceil(K/10)+1 or Ceil(K/11)+1. Alternatively, the value of M may be a maximum M' value satisfying a condition in which Ceil(N/M') is equal to or more than 24. As one example, when K = 20 and N = 96, the value of M may be 2, 3, and 4.

   a. The UCI in which the size is K bits may be divided based on a Modulo M value with respect to a bit index of the UCI. For example, the bit indexes 0, M, 2M, ... may be rearranged to bitstream 0 and bit indexes 1, M+1, 2M+1, ... may be rearranged to bitstream 1.
   b. Alternatively, the UCI in which the size is K bits may be divided into bitstreams by the unit of a predetermined length in an order in which the bit index is lower.
   c. Among M bitstreams, the number of bitstreams in which the length is k+=Ceil(K/M) bits may be Floor(K/k+) and the number of bitstreams in which the length is k-= Ceil(K/M)-1 bits may be M-Floor(K/k+). When K is the multiple of M, the number of bitstreams in which the length is k=K/M may be M.

(2) The UE configures M bitstreams with inputs of L component encoders. Herein, the values of M and L may be the same as each other. In L component encoders, the number of encoders of which the outputs are n+=Ceil(N/L) bits may be Floor(N/n+) and the number of encoders of which output lengths are n-= Ceil(N/L)-1 bits may be L-Floor(N/n+). When N is the multiple of L, the number of component encoders in which the length is n=N/L may be L. The component encoder may be set to RM(n, k). When N is not the multiple of L, n may be the calculated n+ or n- and when K is not the multiple of M, k may be k+ or k-.

   a. L component encoders may be constituted by combinations such as RM(n+, k+), RM(n+, k-), RM(n-, k+), RM(n-, k-), etc.
   b. When N is the multiple of L, Floor(K/k+) RM(n, k+)s and M-Floor(K/k+) RM(n, k-)s may be configured.
   c. When N is the multiple of L and K is the multiple of M, L RM(n, k)s may be configured.

(3) The UE may interleave L output streams generated by L component encoders by the unit of Q bits. The UE may enter a value of Q*L bits of a final output by extracting Q bits from the MSB of each output. In the same scheme, the UE may enter a next Q*L bit value of the final output by extracting next Q bits of each output. The final output of N bits may be generated by repeating the operation. For example, the final output may be rearranged in such a form of first Q bits of a first encoder, first Q bits of a second encoder, ... first Q bits of an L-th encoder, second Q bits of the first encoder, second Q bits of the second encoder, etc.

   a. In more detail, when the output length of the component encoder is odd, 1-bit interleaving may be performed instead of the Q-bit unit interleaving or the 1-bit unit interleaving may be performed with respect to remaining bit information which is constituted by Q bits within the output stream of each component encoder after the Q-bit unit interleaving is performed.
   b. The value of Q may vary according to a modulation order in which the PUCCH or PUSCH is transmitted. For example, the value of Q may be 2 based on the QPSK.

(4) The UE partitions a final N-bit encoded output. The partitioning may mean dividing the final N/2-bit output into bitstreams constituted by N/2 bits and bitstreams constituted by next N/2 bits from the MSB. The respective partitioned bitstreams may be transmitted while being mapped to different slots (for example, the first bitstream may be mapped/transmitted throughout symbols corresponding to a plurality of OCCs in the first slot and the second bitstream may be mapped/transmitted through symbols corresponding to the plurality of OCCs in the second slot). In more detail, when the number of OCC types varies for each slot, asymmetric partitioning may be used. As one example, when three OCCs exist in the first slot and two OCCs exist in the second slot, the final N-bit encoded output may be divided into 3N/5 bits and next 2N/5 bits from the MSB.

a. In yet another scheme, the UE may perform P-time repetition with respect to the final N-bit encoded output. Each N-bit unit encoded output may be transmitted through different resources (within the same PUCCH format resource). Herein, again, different resources may mean a combination of the slot, RB pair, a CDM resource, etc. As one example, an N-bit encoded output is transmitted in the first slot and a signal generated by the same encoded output is transmitted in the second slot to maximize a frequency diversity effect. This scheme may be applied to the PUCCH format having a type in which the OCC is not applied to a data (UCI) transmission symbol.

(5) The UE may map the encoded output allocated to each slot to the RE in such a manner that the frequency index first increases and then, the symbol index increases. For example, the encoded output may be mapped to the RE by increasing the frequency index of the low symbol index and mapped to the RE by increasing the frequency index in the next symbol index. Alternatively, the encoded output may be mapped to the RE in such a manner that the symbol index first increases and then, the frequency index increases. For example, the encoded output may be mapped to the RE by increasing the symbol index of the low frequency index and mapped to the RE by increasing the symbol index in the next frequency index.

Meanwhile, a component encoder configuration form expressed by an equation as above may be expressed by a configuration scheme depending on a bit number range again. When it is assumed that a TBCC is used instead of RM coding, it may be considered and steps (1) to (3) are substituted with TBCC(N, K) in the case of using a single TBCC and when a plurality of TBCCs are used, it may be considered that the RM(Y, A) is substituted with TBCC(Y, A) and in step (1), a criterion for dividing K-bit UCI into M bitstreams is changed to a predetermined value.

The number of output streams for a single or a plurality of TBCCs may be 3 based on the TBCC of which the coding rate is 1/3. Since the TBCC may be vulnerable to a burst error due to a characteristic of the TBCC, all or respective output streams may be interleaved. Next, a more detailed example of an interleaving scheme is described.

As a first example, sub-block unit interleaving is performed with respect to each output stream. The interleaved output streams are concatenated in order (by the unit of stream). As one example, when the interleaved output streams are c00, c01, c02, ..., c0(n-1), c10, c11, c12, ..., c1(n-1), and c20, c21, c22, ..., c2(n-1), respectively, the final output stream is c00, c01, c02, ..., c0(n-1), c10, c11, c12, ..., c1(n-1), c20, c21, c22, ..., c2(n-1).

As a second example, the sub-block unit interleaving is performed with respect to each output stream. The 1-bit unit interleaving is performed with respect to the interleaved output streams. As one example, when the interleaved output streams are c00, c01, c02, ..., c0(n-1), c10, c11, c12, ..., c1(n-1), and c20, c21, c22, ..., c2(n-1), respectively, the final output stream is c00, c10, c20, c01, c11, c21, ..., c0(n-1), c1(n-1), c2(n-1).

As a third example, the sub-block unit interleaving is performed with respect to each output stream. The Q-bit unit interleaving is performed with respect to the interleaved output streams. Q as a value set based on a parameter defined by the modulation order may be 2 based on the QPSK. As one example, when Q =2 and the interleaved output streams are c00, c01, c02, ..., c0(n-1), c10, c11, c12, ..., c1(n-1), and c20, c21, c22, ..., c2(n-1), respectively, the final output stream is c00, c01, c10, c11, c20, c21, c02, c03, c12, ...

As a fourth example, the sub-block unit interleaving is not performed with respect to each output stream and the 1-bit unit interleaving is performed with respect to the output streams.

As a fifth example, the sub-block unit interleaving is not performed with respect to each output stream and the Q-bit unit interleaving is performed with respect to the output streams.

Meanwhile, when the UCI (e.g., HARQ ACK/NACK) is transmitted through the PUSCH, it may be considered that N which is the number of bits of the finally encoded output is set based on a Q_ACK parameter defined by the number of encoded bits mapped to the PUSCH when the corresponding UCI is transmitted through the PUSCH. The Q-ACK is determined based on a parameter defined by the size of the UCI, a total TB size (including a CRC added to an encoded block) to be transmitted through the PUSCH, resource allocation information at the time of initial transmission, the modulation order used in the PUSCH, etc. In more detail, after steps (1) and (2) are performed while the N value is substituted with/set to Q_ACK, steps (3) and (4) may be omitted and the outputs of the respective component encoders may be sequentially concatenated. In step (1), scheme b is applied.

Meanwhile, differently from the slots (that is, a numerical ratio and a positional combination of a UCI transmission symbol and a DMRS transmission symbol) presented in FIGS. 11, 12, 13, and 14, in this section, a new type PUCCH format (for easy description, referred to as "OCC-less PUCCH format") in which all OCCs are not applied in the case of the normal CP or extended CP is proposed.

In this case, as the value of N, N = 240 in FIG. 11a and N = 288 in FIGS. 11b and 11c. In FIG. 11d, N may be 192. In this case, the plurality of PUCCHs are not permitted to be multiplexed in the same RB (pair) area and only one type of DMRS sequence may be used.

Additionally, when the unit of PUCCH transmission is a plurality of RBs or a plurality of PUCCH resources, the value of N may be a value calculated by additionally multiplying the number of RBs or the number of resources again. After the bitstream allocated to each slot is modulated through steps (1) to (4), the first symbol of each slot may be first mapped and a first subcarrier index may be mapped again in sequence.

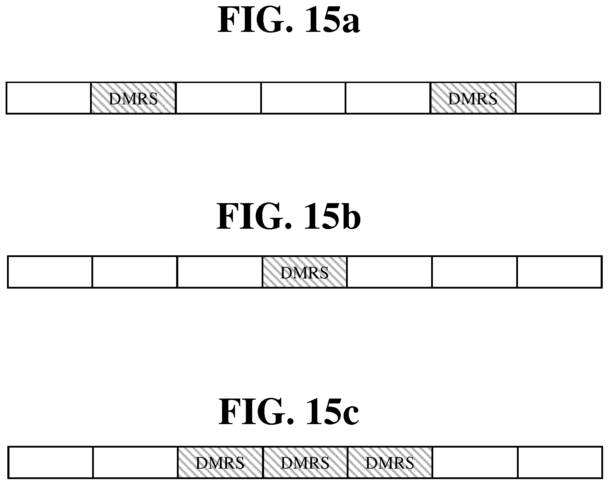

**FIGS. 15a to 15c illustrate a slot including symbols in which the OCC-less PUCCH and the DMRS are mapped to each other in the case of the normal CP.**

In FIGS. 15a to 15c, as the case where the normal CP is used, one slot including 7 symbols is illustrated. The slots illustrated in FIGS. 15a to 15c are the same as the slots illustrated in FIGS. 11a to 11c in terms of the positions of the DMRS. However, the OCC is not applied unlike FIGS. 11a to 11c.

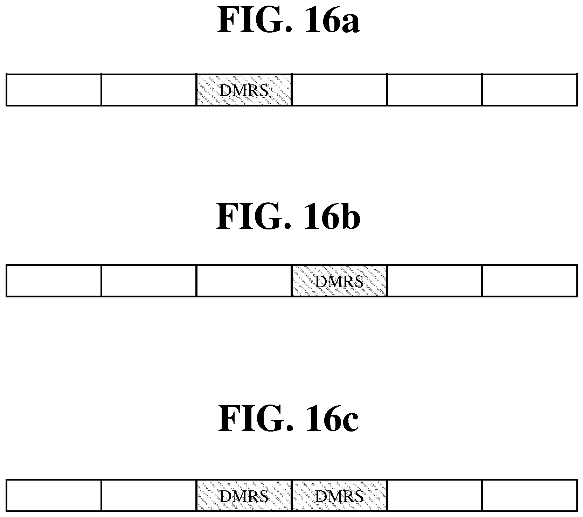

**FIGS. 16a to 16c illustrate the slot including the symbols in which the OCC-less PUCCH and the DMRS are mapped to each other in the case of the extended CP.**

In FIGS. 16a to 16c, as the case where the extended CP is used, one slot including 6 symbols is illustrated. The slots illustrated in FIGS. 16a to 16c are the same as the slots illustrated in FIGS. 12a to 12c in terms of the positions of the DMRS. However, the OCC is not applied unlike FIGS. 12a to 12c.

In a situation in which the OCC is not used, when the shortened PUCCH format (that is, a format in which the PUCCH is not transmitted in the last symbol for SRS transmission) is used, the value of N may be changed. For example, in FIG. 13a, N may be 216 and in FIGS. 13b and 13c, N may be 264 and in FIG. 13d, N may be 168. In this case, similarly as described above, the plurality of PUCCHs are not multiplexed in the same RB (pair) area. Further, only one type of DMRS sequence may also be used. Additionally, when the unit of PUCCH transmission is a plurality of RBs or a plurality of PUCCH resources, the value of N may be a value calculated by additionally multiplying the number of RBs or the number of resources again. After the bitstream allocated to each slot is modulated through steps (1) to (4), the first symbol of each slot may be first mapped to the RE in an order in which the subcarrier index increases.

In more detail, when all OCCs are not applied, the bit/symbol in which the UCI is encoded may be mapped to the RE in such a manner that the symbol index first increases and then, the subcarrier index increases. That is, the bit/symbol in which the UCI is encoded is mapped to the RE so as to increase the frequency index in a symbol having a low index and thereafter, mapped to the RE so as to increase the frequency index in a symbol having the next index. Herein, the unit in first performing the bit/symbol based on the symbol index may be a slot unit. That is, all bits/symbols are mapped to the RE in the first slot and thereafter, mapping is performed in the second slot. In this case, the process of interleaving the output streams in step (3) is omitted and the output streams may be just concatenated. Meanwhile, since the OCC is not applied, multiplexing may not be enabled among the UEs that transmit the PUCCH in the same cell. In this case, a condition in which the shortened PUCCH format is used at the time of transmitting both the SRS and the PUCCH may be eased. As one example, in the existing Rel-12 system, when both the HARQ ACK/NACK and the SRS are configured to be transmitted, only the shortened PUCCH format is used in all cell-specific SRS subframes in order to multiplex the PUCCHs of multiple UEs.

However, when the OCC is not applied, since the PUCCHs of the multiple UEs are not multiplexed, it may be considered that the condition for applying the shortened PUCCH format in order to transmit both the SRS and the PUCCH is set similarly to the PUCCH as described below.

Condition 1: A case where the UE transmits the SRS in the same subframe, and/or
Condition 2: A case in which PUCCH transmission partially overlaps with a cell-specific SRS bandwidth in a subframe in which a cell-specific SRS is configured, and/or
Condition 3: A case in which the SRS transmission is reserved in a UE-specific and aperiodic SRS subframe, and/or
Condition 4: A case in which a plurality of timing advance groups (TAGs) are configured with respect to the UEs, the SRS transmission is reserved in the UE-specific and aperiodic SRS subframe

Meanwhile, the shortened PUCCH format may be used instead of a specific CDM based (the OCC is applied on a time axis or a frequency axis) PUCCH format according to the condition. In more detail, the shortened PUCCH format may be used instead of the PUCCH format in which the OCC is not applied, a format in which the OCC is applied, but a multiplexing capacity is not changed according to whether the shortened PUCCH format is applied, and a PUCCH format in which the CDM is applied on the frequency axis according to the same/similar condition (when both the HARQ ACK/NACK and the SRS are configured to be transmitted).

Meanwhile, when the OCC-less PUCCH format is configured in order to transmit the UCI such as the HARQ ACK/NACK, etc., the OCC-less PUCCH format is the PUCCH for transmitting the UCI, but a basic signal configuration/structure is based on the PUSCH format, and as a result, the following operation may be considered. In detail, when the OCC-less PUCCH format is configured, simultaneous transmission of the corresponding OCC-less PUCCH format transporting the UCI including the HARQ ACK/NACK and a normal PUSCH is continuously permitted and the simultaneous transmission capacity of the PUCCH and the PUSCH in this case and an operation depending on configuration of whether the simultaneous transmission is permitted may be applied only to the case of the simultaneous transmission of the CSI transmission PUCCH format and the SR transmission PUCCH format and the PUSCH.

Further, even in the case of the simultaneous transmission of the PUCCH and the SRS including the HARQ ACK/NACK based on the OCC-less PUCCH format, the following operation may be considered.

As a first example, the PUCCH including the HARQ ACK/NACK may be transmitted by continuously using the normal PUCCH format in a subframe other than the (cell-specific) SRS transmission subframe and the shortened PUCCH format (this PUCCH format may be configured in a rate-matching form to the last symbol) in the SRS transmission subframe according to the simultaneous transmission configuration of the PUCCH and the SRS including the existing HARQ ACK/NACK.

As a second example, the normal PUCCH may be transmitted in the subframe other than the (cell-specific) SRS transmission subframe by regarding a kind of PUSCH and the PUCCH including the HARQ ACK/NACK may be transmitted by using the normal or (rate-matching based) shortened PUCCH format according to whether overlapping with the bandwidth for the cell-specific SRS occurs in the SRS transmission subframe.

Even in the case of simultaneous transmission of the CSI and the SRS based on the new PUCCH format, the following operation may be considered.

As a first example, similarly to a collision between the existing PUCCH format 2 including the CSI and the SRS, one channel of the PUCCH including the CSI and the SRS is dropped and only the other one is transmitted. That is, in this case, in the new PUCCH format, the last symbol is not punctured or rate-matched like the shortened PUCCH format. The channel is selected according to a priority in the order of the aperiodic SRS > the periodic CSI > the periodic SRS.

As a second example, only when the simultaneous transmission of the PUCCH and the SRS including the HARQ ACK/NACK based the new PUCCH format is configured, the simultaneous transmission of the new PUCCH format including and the SRS is supported. In this case, in the new PUCCH format, the last symbol may be punctured or rate-matched like the shortened PUCCH format. When the simultaneous transmission of the HARQ ACK/NACK and the SRS is not configured, the first example is followed.

As a third example, the simultaneous transmission of the new PUCCH format including the CSI and the SRS is continuously supported. In this case, in the new PUCCH format, the last symbol may be punctured or rate-matched like the shortened PUCCH format.

As a fourth example, the base station may configure whether the PUCCH including the CSI and the SRS are simultaneously transmitted for the UE through a higher layer signal. When the simultaneous transmission of the PUCCH including the corresponding CSI and the SRS is configured to be permitted, the simultaneous transmission of the CSI using the new PUCCH format and the SRS is supported. In this case, in the new PUCCH format, the last symbol may be punctured or rate-matched like the shortened PUCCH format. Meanwhile, when the simultaneous transmission of the PUCCH including the CSI and the SRS is not configured, the operation like the first example is performed.

The new PUCCH format may include the OCC-less PUCCH format and additionally include the CDM based (applying the OCC to the time axis or frequency axis) PUCCH format (e.g., PUCCH format 3). When the shortened PUCCH format is not used in a specific situation, the SRS may be dropped. Further, the PUCCH including the CSI may transport only the CSI and additionally transport the HARQ ACK/NACK and/or SR. More distinctively, a case where the HARQ-ACK is HARQ-ACK without the ARI or (E)PDCCH scheduling the PDSCH only in the PCell (only when DAI is additionally 1 in the case of the TDD) may be considered. It may be considered that whether the shortened PUCCH format is applied varies according to the case of transmitting only the CSI and in the case of transmitting the CSI and the HARQ-ACK and/or the SR are different from each other. As one example, when only the CSI is transmitted, the third example or fourth example may be followed and when the CSI and the HARQ-ACK and/or the SR are together transmitted, the second example may be followed.

As yet another scheme, the base station may configure whether the new PUCCH format (the OCC-less format having the PUSCH structure and/or the format in which the OCC is applied to the frequency axis) and the SRS are simultaneously transmitted for the UE through the higher layer signal (e.g., ucisrs-Simultaneous-Format4and5 or format4and5srs-Simultaneous). The higher layer signal may be irrespective of the transmitted UCI and provided only with respect to the new PUCCH format or provided with respect to each format. When the parameter regarding whether the new PUCCH format and the SRS are simultaneously transmitted is set to TRUE, the shortened format with respect to the new PUCCH format may be supported by considering the simultaneous transmission of the SRS regardless of the type of the UCI included in the PUCCH. More distinctively, whether the shortened PUCCH format is used may be determined by considering whether the corresponding UE transmits the SRS, the cell-specific SRS configuration, a UE-specific SRS configuration, etc., like continuous use of the shortened PUCCH format in the cell-specific SRS subframe or rate-matching of the PUSCH. When the simultaneous transmission of the new PUCCH format and the SRS is not configured, the shortened PUCCH format may not be supported regardless of the type of the UCI included in the PUCCH.

Thereafter, when the UCI included in the new PUCCH format includes the HARA-ACK and/or the SR according to the priority of the UCI, the SRS may be dropped, when the UCI includes only the periodic CSI and the SRS is the aperiodic SRS, the PUCCH may be dropped, and when the SRS is the periodic SRS, the SRS may be dropped.

On the other hand, when the length of the output stream of the TBCC is larger than the number of encoded bits (e.g., 48 bits based on PUCCH format 3) so as to be transmitted through the PUCCH (including multi-RBs and multi-resources) resource, application of an additional procedure may be considered in order to reduce a bit size of the output stream of the TBCC. In the additional procedure, some encoded bits may be punctured or truncated according to a predetermined scheme with respect to the output stream. When a constraint length of the TBCC is assumed as K and the coding rate is 1/n, the output of the TBCC may be n bitstreams. The TBCC does not has a Tail bit for initializing a memory or state constituting the encoder to 0 unlike a convolution code and instead, last K-1 information bits are configured as an initial memory value or state value to adjust an initial state and a last state to be the same as each other while encoding. Therefore, when last K-1 encoded bits are punctured/truncated in each of n output streams of the TBCC, the performance of the TBCC may be significantly degraded. Accordingly, in puncturing/truncating the some encoded bits, it may be considered that all or some of last K-1 encoded bits are excluded from each n output streams before interleaving. In this case, the TBCC output stream may be interleaved after the rate-matching for convenience.

Apart from the description, in the case of the TBCC, the respective n output streams may be interleaved and thereafter, sequentially concatenated by each output stream bundle. However, in this case, when some encoded bits are truncated from a last bit index for purposes including rate-matching, etc., only a specific output stream may be truncated. Further, some output streams may not acquire a slot hopping effect at the time of transmitting the PUCCH. Therefore, even in the case of the TBCC, it may be considered that each output stream is configured to be transmitted throughout two slots and in a more detailed scheme, an output interleaving scheme for a case where the number of component encoders is 3 may be used in the RM scheme.

As yet another access scheme, as a part for avoiding the situation, when a total length of the TBCC output is more than the number of encoded bits which may be transmitted through the PUCCH, it may be considered that (1) the number of RBs constituting the PUCCH increases, (2) the number of PUCCH resources used for transmitting the PUCCH increases, (3) the current PUCCH format is changed to a PUCCH format that may transport more encoded bits, or (4) the UCI (e.g., the HARQ ACK/NACK) is bundled. As one example, when PUCCH format 3 is used, it may be considered that the PUCCH is transmitted through one RB when the UCI size or HARQ ACK/NACK size is up to 16, when the UCI size or HARQ ACK/NACK size is more than 16 and 32 or less, the PUCCH is transmitted through two RBs, and the number of RBs increases in the same scheme even with respect to the residual sizes. More distinctively, when the UCI size or HARQ ACK/NACK size is 21 or 22 or less, it may be considered that the PUCCH is transmitted by using RM coding based PUCCH format 3 and thereafter, the number of RBs increases according to the TBCC related operation.

Next, examples of codes which may be generated according to the scheme are arranged. In a table given below, [K, N] represents an encoding process of generating the UCI in which the size is K bits to the final N-bit output.

[Table 7]

| | |
|---|---|
| A. | [in, out] = [10, 96] |
| i. | Code 1: one RM(96, 10) is applied |
| ii. | Code 2: two RM(48, 5)s are applied |
| | |
| B. | [in, out] = [20, 96] |
| i. | Code 1: two RM(48, 10)s are applied |
| ii. | Code 2: two RM(32, 7)s are applied and one RM(32, 6) is applied |
| iii. | Code 3: Four RM(24, 5)s are applied |
| | |
| C. | [in, out] = [30, 96] |
| i. | Code 1: Three RM(32, 10)s are applied |
| ii. | Code 2: Two RM(24, 8)s are applied and two RM(24, 7)s are applied |
| | |
| D. | [in, out] = [40, 96] |
| i. | Code 1: Four RM(24, 10)s are applied |
| | |
| E. | [in, out] = [10, 120] |
| i. | Code 1: One RM(120, 10) is applied |
| ii. | Code 2: Two RM(60, 5)s are applied |

(continued)

| | |
|---|---|
| F. | [in, out] = [20, 120] |
| i. | Code 1: Two RM(60, 10)s are applied |
| ii. | Code 2: Two RM(40, 7)s are applied and one RM(40, 6) is applied |
| iii. | Code 3: Four RM(30, 5)s are applied |
| G. | [in, out] = [30, 120] |
| i. | Code 1: Three RM(40, 10)s are applied |
| ii. | Code 2: Two RM(30, 8)s are applied and two RM(30, 7)s are applied |
| H. | [in, out] = [40, 120] |
| i. | Code 1: Four RM(30, 10)s are applied |
| I. | [in, out] = [50, 120] |
| i. | Code 1: Five RM(24, 10)s are applied |
| ii. | Code 2: Two RM(20, 9)s are applied and four RM(20, 8)s are applied |
| J. | [in, out] = [10, 144] |
| i. | Code 1: One RM(144, 10) is applied |
| ii. | Code 2: Two RM(72, 5)s are applied |
| K. | [in, out] = [20, 144] |
| i. | Code 1: Two RM(72, 10)s are applied |
| ii. | Code 2: Two RM(48, 7)s are applied and one RM(48, 6) is applied |
| iii. | Code 3: Four RM(36, 5)s are applied |
| L. | [in, out] = [30, 144] |
| i. | Code 1: Three RM(48, 10)s are applied |
| ii. | Code 2: Two RM(36, 8)s are applied and two RM(36, 7)s are applied |
| M. | [in, out] = [40, 144] |
| i. | Code 1: Four RM(36, 10)s are applied |
| N. | [in, out] = [50, 144] |
| i. | Code 1: Four RM(29, 10)s are applied and one RM(28, 10) is applied |
| ii. | Code 2: Two RM(24, 9)s are applied and four RM(24, 8)s are applied |
| O. | [in, out] = [60, 144] |
| i. | Code 1: Sixth RM(24, 10)s are applied |

In the above table, an input size criterion expressed by the unit of 10 bits may be expressed to an 11-bit unit or expressed by a combination of 10 and 11 bits. As one example, according to the application step, the [in, out] = [60, 144] based coding scheme may be applied to the UCI size of 5 to 60 bits or 56 to 66 bits.

Meanwhile, the following RE mapping scheme to the encoded output may be applied according to the UCI coding scheme. For easy description, the outputs of the respective RM codes when the plurality of RM codes are used and the outputs of the respective encoders when the TBCC is used are commonly referred to as codeword (CW) and the following proposal scheme may be applied to the new PUCCH formats including the PUCCH format (short-OCC PUCCH) illustrated in FIGS. 11 to 14, the PUCCH format (that is, OCC-less PUCCH) in which the OCC is not applied, the PUCCH format (that is, multi-RB PUCCH) constituted by multiple RBs (pair) (the DMRS sequence is generated by the unit of corresponding multiple RB lengths), the PUCCH format (that is, multi-resource PUCCH) constituted by multiple PUCCH resources (the DMRS sequence is generated for each PUCCH resource (e.g., RB), etc.

As a first example, while the respective CWs are concatenated (without interleaving), the corresponding concatenated CWs are mapped to the RE by a time first scheme on the PUCCH resource. Herein, in the case of time first mapping, in detail, 1) all concatenated CWs are mapped to the RE by the time first scheme with respect to all subframes (that is, all symbols in the subframe) or 2) all concatenated CWs are divided to a half to generate two sub-CWs and thereafter, a first sub-CW is mapped to the RE in the first slot and a second sub-CW is mapped to the RE with respect to the second slot by the time first scheme.

As a second example, while the proposal based interleaving is applied among the respective CWs, the corresponding interleaved CW is mapped to the RE by a frequency first scheme on the PUCCH resource. Herein, in the frequency first mapping, for example, all interleaved CWs are divided into a half to generate two sub-CWs and thereafter, the first sub-CW may be mapped to the RE by the frequency first scheme in the first slot and the second sub-CW may be mapped to the RE by the frequency first scheme in the second slot.

In the case of the aforementioned example, the frequency first mapping may be applied differently according to the coding scheme and/or the PUCCH format structure and a combination thereof. As one example, when the TBCC based coding is applied (regardless of the PUCCH format), the first example may be used and when the multiple RM based condign is applied, the second example may be considered and in the OCC-less PUCCH among the new PUCCH formats (regardless of the coding scheme), the first example may be used and in the case of the residual (OCC application based) PUCCH formats, the second example may be used. As another example, the first example may be used with respect to the combination of the TBCC and the OCC-less PUCCH and the second example may be applied to the residual combinations (a case where the multiple RMs are applied or the OCC application based PUCCH format).

### IV. DMRS configuration scheme for new PUCCH format

In the related art, multiple PUCCHs for a single or multiple UEs may be permitted to be multiplexed by using the OCC with respect to an area other than the DMRS. However, even in the case of the DMRS, the CDM needs to be enabled for each of the multiple PUCCH resources like the data region. Based on the existing LTE Rel-11 system, in PUCCH format 3, the multiple PUCCHs are permitted to be multiplexed in the same RB (pair) through the OCC of which the length is 5 (when the shortened PUCCH format is not used) with respect to the area other than the DMRS and in the case of the DMRS, the multiple PUCCH resources are permitted to be multiplexed within the same RB (pair) by changing a cyclic shift value for the DMRS based on the parameter defined by the corresponding OCC index in the case of the DMRS. An equation given below is an equation used at the time of applying the cyclic shift for the DMRS in PUCCH format 3.

$$[\text{Equation 14}]$$

$$\alpha_{\tilde{p}}(n_s, l) = 2\pi \cdot n_{cs}^{(\tilde{p})}(n_s, l)/N_{sc}^{RB}$$

$$n_{cs}^{(\tilde{p})}(n_s, l) = \left(n_{cs}^{cell}(n_s, l) + n_{\tilde{p}}'(n_s)\right) \bmod N_{sc}^{RB}$$

In the above equation, $n_{cs}^{cell}(n_s, l)$ represents a value for setting a physical cell ID or RS ID as the parameter and $n_{\tilde{p}}'(n_s)$ represents a value set so that the DMRS interlocks with the OCC index to multiplex the multiple PUCCH resources in the same RB (pair) together with the data. That is, in PUCCH format 3, changing the cyclic shift of the OCC and the DMRS in the data region is used in supporting that the multiple PUCCH resources are multiplexed in the same RB (pair).

In a next system, a case where the minimum value of the length of the OCC is 2 or 3 (per slot) at the time of supporting the new PUCCH format may be considered. The case where the minimum value is 2 may include even a case where multiple OCC types exist in the slot and the length of each OCC is set only to 2 or 2 or a value (e.g., 3) equal to or more than 2 and the symbol to which the OCC is not applied may be excluded from a process of determining the minimum OCC length. Fundamentally, the value of $n_{cs}^{(\tilde{p})}(n_s, l)$ used at the time of setting the cyclic shift in the above equation finally shows a form having a Modulo $N_{sc}^{RB}$ value. Therefore, when the minimum value for the length of the OCC is N_OCC (per slot), a difference between candidate values for $n_{\tilde{p}}'(n_s)$ may be set to $N_{sc}^{RB}/N_{OCC}$ or an integer value close to the corresponding value.

A table given below shows an example of a value used as the parameter at the time of setting the cyclic shift value when a minimum value of the length of the OCC is 2 or 3 (for each slot).

In the case of $n_{\tilde{p}}'(n_s)$ presented in a table given below, the respective parameters may be set while including the same offset value. For example, when the minimum OCC length is 3, three DMRS cyclic shift values may become 0+a, 4+a, and 8+a (a > 0) and when the minimum OCC length is 2, two DMRS cyclic shift values may become 0+b and 6+b (b > 0).

The table given below shows a relationship between $n_{oc}^{(\tilde{p})}$ and $n_{\tilde{p}}'(n_s)$ for the new PUCCH format.

[Table 8]

| $n_{oc}^{(\tilde{p})}$ | $n_{\tilde{p}}'(n_s)$ | |
|---|---|---|
| | $N_{SF,1}=3$ | $N_{SF,1}=2$ |
| 0 | 0 | 0 |
| 1 | 4 | 6 |
| 2 | 8 | N/A |

The PUCCH format to be newly introduced may include the multiple DMRSs (per slot) and in this case, it may be considered that the OCC is applied to the DMRS. It may be considered that the length of the OCC for the DMRS is the same as the number of OFDM symbols to which the DMRS is mapped and in an OCC selection scheme, an OCC sequence of a table given below may be used. As a scheme for supporting the multiplexing of the DMRS, the scheme using the cyclic shift, the scheme using the OCC, and the scheme using the combination of the cyclic shift (that is, CS) and the OCC may be considered as described above.

[Table 9]

| Sequence index $n_{oc}$ | $\left[ w_{n_{oc}}(0) \quad \cdots \quad w_{n_{oc}}(N_{SF}^{PUCCH}-1) \right]$ Orthogonal sequence | |
|---|---|---|
| | $N^{PUCCH}{}_{SF}=3$ | $N^{PUCCH}{}_{SF}=2$ |
| 0 | [+1 +1 +1] | [+1+1] |
| 1 | [+1 $e^{j2\pi/3}$ $e^{j4\pi/3}$] | [+1 -1] |
| 2 | [+1 $e^{j4\pi/3}$ $e^{j2\pi/3}$ | |

Distinctively, in the case of the PUCCH format of a type in which the multiple DMRS transmission symbols are configured per slot while the OCC is not applied to the uplink data (UCI) transmission symbol, a specific OCC (and a combination of the specific OCC and the CS value) may be applied (per slot) for the multiplexing between the corresponding PUCCH format based PUCCH resources or the multiplexing between the PUCCH resource and the existing PUCCH format (e.g., PUCCH format 3). Further, this type of PUCCH format based resource may be distinguished/indexed by using the PRB index for the DMRS and the CS value (and/or the OCC index).

**V. Power configuration scheme for new PUCCH format**

When power for the PUCCH is determined, the parameter defined by the number of component RM encoders or the UCI size may be used. As one example, in the case of PUCC format 3, it is considered that a power increase degree depending on the change in UCI size is set differently according to the case where the number of component RMs is 1 and the case where the number of component RMs is 2 or the case where the UCI size is 11 bits or less and the case where the UCI size is more than 11 bits. Additionally, the power increase degree may be set differently even according to whether to apply a transmission diversity scheme (hereinafter, referred to as TxD) to the PUCCH. The TxD applied to the PUCCH may be a scheme that maps different PUCCH resources to independent antenna ports (APs) and maps the same encoded output information to each of the corresponding PUCCH resources and transmits the corresponding output information. As one example, in PUCCH format 3, when the UCI size is more than 11 bits or the TxD is applied, the transmission power is changed by 1/3 according to the change in UCI size value and in the remaining cases, the transmission power of the PUCCH is changed by 1/2 according to the change in UCI size value. When this is expressed by the equation, the corresponding equation is shown below. In the equation given below, it may be interpreted that the UCI may be constituted by a combination of the HARQ ACK/NACK, the CSI, and the SR.

[Equation 15]

$$h\left(n_{CQI}, n_{HARQ}, n_{SR}\right) = \frac{n_{UCI} - 1}{3}$$

[Equation 16]

$$h\left(n_{CQI}, n_{HARQ}, n_{SR}\right) = \frac{n_{UCI} - 1}{2}$$

Similarly, it may be considered that a variation level of the transmission power for the change in UCI size is set differently according to the number of component encoders used while encoding or the UCI size even with respect to the new PUCCH format. As one example, when the PUCCH transmission power variation value for the change in UCI size value may be 1/2 when the number of component RMs is 1 and 1/3 when the number of component RMs is 2. Additionally, when the number of component encoders is more than 2, the PUCCH transmission power variation value may be still set to 1/3 or it may be considered that the PUCCH transmission power variation value for the change in UCI size value continuously decreases as the number of component encoders increases. As the embodiment, when the number of component encoders is L, the PUCCH transmission power variation value for the change in UCI size value may be 1/(1+L). Alternatively, it may be considered that the PUCCH transmission power variation value for the change in UCI size value is set differently according to the UCI size and it may be considered that the corresponding variation value decreases by the unit of 10 or 11. As the embodiment, when the UCI size is K bits (K is an integer value of 1 or more), the PUCCH transmission power variation value for the change in UCI size value may be set to 1/(2+Floor((K-1)/11)) and fixed to 1/3 at the time when the K value is more than 11. The situation may be limited to a case where the TxD is not applied to the PUCCH.

When the transmission power for the PUCCH is set, an offset exists, which is set and applied independently for each PUCCH format and the corresponding value may be independently performed even with respect to the new PUCCH format. Based on the existing LTE Rel-11 system, candidates of a value of an offset (hereinafter, written as deltaF-PUCCH-FormatX, X = 3 with respect to PUCCH format 3) for PUCCH format 3 are {-1, 0, 1, 2, 3, 4, 5, 6}. It may be considered that the parameter is used, which is defined by the offset value for PUCCH format 3 and a maximum coding rate supported by PUCCH format 3, the maximum condign rate supported by the new PUCCH format, etc. in selecting the offset value candidate for the new PUCCH format. In the above description, the coding rate may be a value acquired by dividing the maximum UCI size which may be transmitted through the corresponding PUCCH by the total number of REs in the PUCCH used for transmitting the UCI. As one example, in the case of PUCCH format 3, a maximum value of the UCI size may be set to 21 or 22 and the number of REs may be set to 120. In this case, the coding rate which may be supported in PUCCH format 3 may be 0.175 or 0.183. When the total number of REs in the PUCCH for transmitting the UCI is assumed as N_UCI with respect to the new PUCCH format and the maximum UCI size is represented by K_max, the coding rate may be set to K_max/N_UCI. As a first example, when K_max is 32 or 33 and N_UCI is 120, each coding rate may be 0.267 or 0.275. As a second example, when K_max is 64 or 65 and N_UCI is 144, each coding rate may be 0.444 or 0.451. A ratio between the coding rate for PUCCH format 3 and the coding rate for the new PUCCH format may be expressed by the unit of dB and an integer close to the corresponding value (through round, ceil, or floor) may be used at the time of selecting the candidate for new deltaF-PUCCH-FormatX. In the first example and the second example, 2 and 4 dB may be acquired, respectively and the following candidate value may be derived from deltaF-PUCCH-Format3 which is the offset value for PUCCH format 3 based on 4 dB. {-1, 0, 1, 2, 3, 4, 5, 6, 7, 8, 9, 10}. Therefore, it may be considered that as the candidate value for the new PUCCH format, the candidate is selected from all or a sub-set of {-1, 0, 1, 2, 3, 4, 5, 6, 7, 8, 9, 10}.

Alternatively, deltaF-PUCCH-FormatX may be derived from a difference in performance from PUCCH format 1a. In the new PUCCH format, a case where the number of cells, which is basically set is 6 or more may be assumed and in this case, deltaF-PUCCH-FormatX may be derived based on a case where the size of the UCI transmitted through the new PUCCH format is 6. A table given below relates to a case where the new PUCCH format is an OCC-less PUSCH-lie format and shows a difference in performance between an ETU channel and an EPA channel. That is, the table given below shows the difference in performance between PUCCH format 1a and PUCCH format 4.

[Table 10]

|  | ETU 3kmph | ETU 120 kmph | EPA 3kmph |
|---|---|---|---|
| Difference | 7.9 | 8.1 | 8.35 |

From the above table, it may be assumed that the new PUCCH format has an offset of 8 or 9 as compared with PUCCH format 1a. Therefore, the candidate value for deltaF-PUCCH-FormatX may be selected from all or the subset of {6, 7, 8, 9, 10, 11}. Additionally, the offset may exist, which varies according to the UCI size in the equation for controlling the PUCCH transmission power and the candidate value may be changed to formats of {6-offset, 7-offset, 8-offset, 9-offset, 10-offset, 11-offset} based on the corresponding offset value. As one example, the offset may be a value for the case where the UCI size is 6 bits and when the corresponding value is negative, the value needs to be compensated. In more detail, the offset value may be 2 or 3 (for reference, a value of delta_TF when the value of K_S is 1.25) or 5 or 6 (for reference, the value of delta_TF when the value of K_S is 0.45).

The embodiments of the present invention which has been described up to now may be implemented through various means. For example, the embodiments of the present invention may be implemented by hardware, firmware, software, or combinations thereof. In detail, the embodiments will be descried with reference to the drawings.

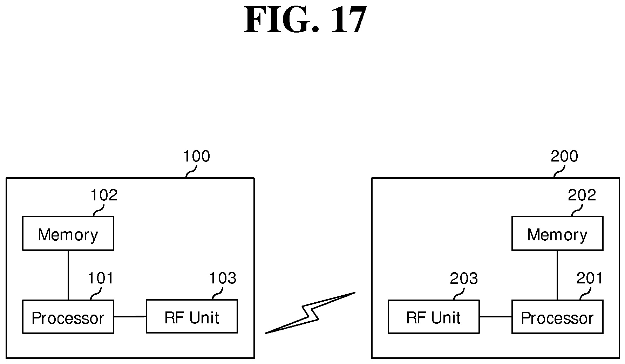

**FIG. 17 is a block diagram illustrating a wireless communication system in which the disclosure of the present invention is implemented.**

A base station 200 includes a processor 201, a memory 202, and a radio frequency (RF) unit 203. The memory 202 is connected with the processor 201 to store various pieces of information for driving the processor 201. The RF unit 203 is connected with the processor 201 to transmit and/or receive a radio signal. The processor 201 implements a function, a process, and/or a method which are proposed. In the aforementioned embodiment, the operation of the base station may be implemented by the processor 201.

An MTC device 100 includes a processor 101, a memory 102, and an RF unit 103. The memory 102 is connected with the processor 101 to store various pieces of information for driving the processor 101. The RF unit 103 is connected with the processor 101 to transmit and/or receive a radio signal. The processor 101 implements a function, a process, and/or a method which are proposed.

The processor may include an application-specific integrated circuit (ASIC), another chip set, a logic circuit and/or a data processing apparatus. The memory may include a read-only memory (ROM), a random access memory (RAM), a flash memory, a memory card, a storage medium, and/or other storage device. The RF unit may include a baseband circuit for processing the radio signal. When the embodiment is implemented by software, the aforementioned technique may be implemented by a module (a process, a function, and the like) that performs the aforementioned function. The module may be stored in the memory and executed by the processor. The memory may be positioned inside or outside the processor and connected with the processor by various well-known means.

In the aforementioned exemplary system, methods have been described based on flowcharts as a series of steps or blocks, but the methods are not limited to the order of the steps of the present invention and any step may occur in a step or an order different from or simultaneously as the aforementioned step or order. Further, it can be appreciated by those skilled in the art that steps shown in the flowcharts are not exclusive and other steps may be included or one or more steps do not influence the scope of the present invention and may be deleted. The scope of the invention is defined by the appended claims.

**Claims**

1. A method for transmitting a physical uplink control channel, PUCCH, signal, the method comprising:

   transmitting the PUCCH signal based on a shortened PUCCH format; and
   transmitting a demodulation reference signal, DMRS, for the PUCCH signal,
   wherein a last orthogonal frequency division multiplexing, OFDM, symbol in the subframe is not used for the shortened PUCCH format,
   wherein the last OFDM symbol is not applied with an orthogonal sequence, and
   wherein the DMRS is transmitted in one OFDM symbol per a slot in the subframe.

2. The method of claim 1, wherein the PUCCH signal based on the shortened PUCCH format is mapped into resource elements, REs, in increasing order of first frequency indexes and then OFDM symbol indexes except for the last OFDM symbol.

3. The method of claim 1,
   wherein the PUCCH signal includes a hybrid automatic repeat request, HARQ, acknowledgement, ACK.

4. The method of claim 1, wherein the shortened PUCCH format is used, based on a first condition that a simultaneous transmission of the PUCCH signal and a sounding reference signal, SRS, is configured in a subframe and a second condition that the transmission of the PUCCH signal partly or fully overlaps with a bandwidth of a cell-specific SRS.

5. The method of claim 1, wherein the subframe is configured as a cell-specific SRS subframe.

6. The method of claim 1, wherein the shortened PUCCH format is based on a new PUCCH format different from PUCCH formats 1, 1a, 1b and 3.

7. The method of claim 1, further comprising:
determining whether to apply the orthogonal sequence to OFDM symbols in the subframe, based on the shortened PUCCH format.

8. The method of claim 1,
wherein the orthogonal sequence is applied to OFDM symbols, except for the last OFDM symbol, in the subframe.

9. The method of claim 1, wherein the shortened PUCCH format includes:

a first shortened PUCCH format in which the orthogonal sequence is applied, and
a second shortened PUCCH format in which the orthogonal sequence is not applied.

10. A wireless terminal (100) for transmitting a physical uplink control channel, PUCCH, signal, the wireless terminal (100) comprising:

a transceiver (103);
a processor (101) configured to control the transceiver (103) thereby performing:

transmitting the PUCCH signal based on a shortened PUCCH format,
transmitting a demodulation reference signal, DMRS, for the PUCCH signal,
wherein a last orthogonal frequency division multiplexing, OFDM, symbol in the subframe is not used for the shortened PUCCH format does not use,
wherein the last OFDM symbol is not applied with an orthogonal sequence, and
wherein the DMRS is transmitted in one OFDM symbol per a slot in the subframe.

11. The wireless terminal (100) of claim 10, wherein the PUCCH signal based on the shortened PUCCH format is mapped into resource elements, REs, in increasing order of first frequency indexes and then OFDM symbol indexes except for the last OFDM symbol.

12. The wireless terminal (100) of claim 10,
wherein the PUCCH signal includes a hybrid automatic repeat request, HARQ, acknowledgement, ACK.

13. The wireless terminal (100) of claim 10, wherein the shortened PUCCH format is used, based on a first condition that a simultaneous transmission of the PUCCH signal and a sounding reference signal, SRS, is configured in a subframe and a second condition that the transmission of the PUCCH signal partly or fully overlaps with a bandwidth of a cell-specific SRS.

14. The wireless terminal (100) of claim 10, wherein the subframe is configured as a cell-specific SRS subframe.

15. The wireless terminal (100) of claim 10, wherein the shortened PUCCH format is based on a new PUCCH format different from PUCCH formats 1, 1a, 1b and 3.

16. The wireless terminal (100) of claim 10, wherein the processor is configured to:
determine whether to apply the orthogonal sequence to OFDM symbols in the subframe, based on the shortened PUCCH format.

17. The wireless terminal (100) of claim 10,
wherein the orthogonal sequence is applied to OFDM symbols, except for the last OFDM symbol, in the subframe.

18. The wireless terminal (100) of claim 10, wherein the shortened PUCCH format includes:

a first shortened PUCCH format in which the orthogonal sequence is applied, and
a second shortened PUCCH format in which the orthogonal sequence is not applied.

**Patentansprüche**

1. Ein Verfahren zum Übertragen eines physikalischen Uplink-Steuerkanal, PUCCH, -Signals, wobei das Verfahren umfasst:

   Übertragen des PUCCH-Signals auf der Grundlage eines verkürzten PUCCH-Formats; und
   Übertragen eines Demodulationsreferenzsignals, DMRS, für das PUCCH-Signal,
   wobei ein letztes Orthogonal Frequency Division Multiplexing, OFDM, -Symbol in dem Unterrahmen nicht für das verkürzte PUCCH-Format verwendet wird,
   wobei das letzte OFDM-Symbol nicht mit einer orthogonalen Sequenz angewendet wird, und
   wobei das DMRS in einem OFDM-Symbol pro Schlitz in dem Unterrahmen übertragen wird.

2. Das Verfahren nach Anspruch 1, wobei das auf dem verkürzten PUCCH-Format basierende PUCCH-Signal in Ressourcenelemente, REs, in aufsteigender Reihenfolge von ersten Frequenzindizes und dann OFDM-Symbolindizes mit Ausnahme des letzten OFDM-Symbols abgebildet wird.

3. Das Verfahren nach Anspruch 1,
   wobei das PUCCH-Signal eine hybrid automatic repeat request, HARQ, - Bestätigung, ACK, enthält.

4. Das Verfahren nach Anspruch 1, bei dem das verkürzte PUCCH-Format verwendet wird, basierend auf einer ersten Bedingung, dass eine gleichzeitige Übertragung des PUCCH-Signals und eines sounding reference signal, SRS, in einem Unterrahmen konfiguriert ist, und einer zweiten Bedingung, dass die Übertragung des PUCCH-Signals sich teilweise oder vollständig mit einer Bandbreite eines zellspezifischen SRS überlappt.

5. Das Verfahren nach Anspruch 1, wobei der Unterrahmen als ein zellspezifischer SRS-Unterrahmen konfiguriert ist.

6. Das Verfahren nach Anspruch 1, wobei das verkürzte PUCCH-Format auf einem neuen PUCCH-Format basiert, das sich von den PUCCH-Formaten 1, 1a, 1b und 3 unterscheidet.

7. Das Verfahren nach Anspruch 1, weiter umfassend:
   Bestimmen, ob die orthogonale Sequenz auf OFDM-Symbole in dem Unterrahmen angewendet werden soll, basierend auf dem verkürzten PUCCH-Format.

8. Das Verfahren nach Anspruch 1,
   wobei die orthogonale Sequenz auf OFDM-Symbole, mit Ausnahme des letzten OFDM-Symbols, in dem Unterrahmen angewendet wird.

9. Das Verfahren nach Anspruch 1, wobei das verkürzte PUCCH-Format aufweist:

   ein erstes verkürztes PUCCH-Format, in dem die orthogonale Sequenz angewendet wird, und
   ein zweites verkürztes PUCCH-Format, in dem die orthogonale Sequenz nicht angewendet wird.

10. Ein drahtloses Endgerät (100) zum Übertragen eines physikalischen Uplink-Steuerkanal, PUCCH, -Signals, wobei das drahtlose Endgerät (100) umfasst:

    einen Transceiver (103);
    einen Prozessor (101), der konfiguriert ist, den Transceiver (103) zu steuern und dadurch auszuführen:

    Übertragen des PUCCH-Signals auf der Grundlage eines verkürzten PUCCH-Formats; und
    Übertragen eines Demodulationsreferenzsignals, DMRS, für das PUCCH-Signal,
    wobei ein letztes Orthogonal Frequency Division Multiplexing, OFDM, -Symbol in dem Unterrahmen nicht für das verkürzte PUCCH-Format verwendet wird,
    wobei das letzte OFDM-Symbol nicht mit einer orthogonalen Sequenz angewendet wird, und
    wobei das DMRS in einem OFDM-Symbol pro Schlitz in dem Unterrahmen übertragen wird.

**11.** Das drahtlose Endgerät (100) nach Anspruch 10, wobei das auf dem verkürzten PUCCH-Format basierende PUCCH-Signal in Ressourcenelementen, REs, in aufsteigender Reihenfolge von ersten Frequenzindizes und dann OFDM-Symbolindizes mit Ausnahme des letzten OFDM-Symbols abgebildet wird.

**12.** Das drahtlose Endgerät (100) aus Anspruch 10,
wobei das PUCCH-Signal eine hybrid automatic repeat request, HARQ, - Bestätigung, ACK, enthält.

**13.** Das drahtlose Endgerät (100) nach Anspruch 10, wobei das verkürzte PUCCH-Format verwendet wird, basieren auf einer ersten Bedingung, dass eine gleichzeitige Übertragung des PUCCH-Signals und eines sounding reference signal, SRS, in einem Unterrahmen konfiguriert ist, und einer zweiten Bedingung, dass sich die Übertragung des PUCCH-Signals teilweise oder vollständig mit einer Bandbreite eines zellspezifischen SRS überlappt.

**14.** Das drahtlose Endgerät (100) nach Anspruch 10, wobei der Unterrahmen als zellspezifischer SRS-Unterrahmen konfiguriert ist.

**15.** Das drahtlose Endgerät (100) nach Anspruch 10, wobei das verkürzte PUCCH-Format auf einem neuen PUCCH-Format basiert, das sich von den PUCCH-Formaten 1, 1a, 1b und 3 unterscheidet.

**16.** Das drahtlose Endgerät (100) nach Anspruch 10, wobei der Prozessor konfiguriert ist:
Zu bestimmen, ob die orthogonale Sequenz auf OFDM-Symbole in dem Unterrahmen angewendet werden soll, basierend auf dem verkürzten PUCCH-Format.

**17.** Das drahtlose Endgerät (100) nach Anspruch 10,
wobei die orthogonale Sequenz auf OFDM-Symbole, mit Ausnahme des letzten OFDM-Symbols, in dem Unterrahmen angewendet wird.

**18.** Das drahtlose Endgerät (100) nach Anspruch 10, wobei das verkürzte PUCCH-Format aufweist:

ein erstes verkürztes PUCCH-Format, in dem die orthogonale Sequenz angewendet wird, und
ein zweites verkürztes PUCCH-Format, in dem die orthogonale Sequenz nicht angewendet wird.


**Revendications**

**1.** Procédé de transmission d'un signal de canal physique de contrôle montant, PUCCH, le procédé consistant à :

transmettre le signal PUCCH sur la base d'un format PUCCH abrégé ; et
transmettre un signal de référence de démodulation, DMRS, pour le signal PUCCH,
un dernier symbole de multiplexage par répartition orthogonale de la fréquence, OFDM, dans la sous-trame n'étant pas utilisé pour le format PUCCH abrégé,
le dernier symbole OFDM n'étant pas appliqué avec une séquence orthogonale,
et
le DMRS étant transmis sur un symbole OFDM par créneau dans la sous-trame.

**2.** Procédé selon la revendication 1, le signal PUCCH basé sur le format PUCCH abrégé étant mappé dans les éléments de ressource, RE, par ordre croissant des premiers indices de fréquence et ensuite des indices de symboles OFDM excepté pour le dernier symbole OFDM.

**3.** Procédé selon la revendication 1,
le signal PUCCH comprenant un accusé de réception, ACK, de requête automatique de répétition hybride, HARQ.

**4.** Procédé selon la revendication, le format PUCCH abrégé étant utilisé, sur la base d'une première condition qu'une transmission simultanée du signal PUCCH et un signal de référence de sondage, SRS, étant configurés dans une sous-trame et sur la base d'une seconde condition que la transmission du signal PUCCH chevauche partiellement ou entièrement une bande passante d"un SRS spécifique à la cellule.

**5.** Procédé selon la revendication 1, la sous-trame étant configurée en tant que sous-trame du SRS spécifique à la cellule.

**6.** Procédé selon la revendication 1, le format PUCCH abrégé étant basé sur un nouveau format PUCCH différents des formats PUCCH 1, la, 1b et 3.

**7.** Procédé selon la revendication 1, consistant en outre :
déterminer s'il faut appliquer la séquence orthogonale aux symboles OFDM dans la sous-trame, sur la base du format PUCCH abrégé.

**8.** Procédé selon la revendication 1, la séquence orthogonale étant appliquée aux symboles OFDM, excepté pour le dernier symbole OFDM dans la sous-trame.

**9.** Procédé selon la revendication 1, le format PUCCH abrégé comprenant :

un premier format PUCCH abrégé dans lequel est appliquée la séquence orthogonale,
et
un second format PUCCH abrégé dans lequel n'est pas appliquée la séquence orthogonale.

**10.** Terminal sans fil (100) pour transmettre un signal de canal physique de contrôle montant, PUCCH, le terminal sans fil (100) comprenant :

un émetteur-récepteur (103) ;
un processeur (101) configuré pour amener l'émetteur-récepteur (103) à :

transmettre le signal PUCCH basé sur un format PUCCH abrégé,
transmettre un signal de référence de démodulation, DMRS, pour le signal PUCCH,
un dernier symbole de multiplexage par répartition orthogonale de la fréquence, OFDM, dans la sous-trame n'étant pas utilisé pour le format PUCCH abrégé,
le dernier symbole OFDM n'étant pas appliqué avec une séquence orthogonale, et
le DMRS étant transmis sur un symbole OFDM par créneau dans la sous-trame.

**11.** Terminal sans fil (100) selon la revendication 10, le signal PUCCH basé sur le format PUCCH abrégé étant mappé dans des éléments de ressources, RE, par ordre croissant des premiers indices de fréquence et ensuite des indices de symbole OFDM excepté pour le dernier symbole OFDM.

**12.** Terminal sans fil (100) selon la revendication 10, le signal PUCCH comprenant un accusé de réception, ACK, de requête automatique de répétition hybride, HARQ.

**13.** Terminal sans fil (100) selon la revendication 10, le format PUCCH abrégé étant utilisé, sur la base d'une première condition qu'une transmission simultanée du signal PUCCH et d'un signal de référence de sondage, SRS, sont configurés dans une sous-trame et sur une seconde condition que la transmission du signal PUCCH chevauche partiellement ou entièrement une bande passante d'un SRS spécifique à une cellule.

**14.** Terminal sans fil (100) selon la revendication 10, la sous-trame étant configurée en tant que sous-trame de SRS spécifique à une cellule.

**15.** Terminal sans fil (100) selon la revendication 10, le format PUCCH abrégé étant basé sur un nouveau format PUCCH différent des formats PUCCH 1, la, 1b et 3.

**16.** Terminal sans fil (100) selon la revendication 10, le processeur étant configuré pour :
déterminer s'il faut appliquer la séquence orthogonale aux symboles OFDM dans la sous-trame, sur la base du format PUCCH abrégé.

**17.** Terminal sans fil (100) selon la revendication 10, la séquence orthogonale étant appliquée aux symboles OFDM, excepté pour le dernier symbole OFDM, dans la sous-trame.

**18.** Terminal sans fil (100) selon la revendication 10, le format PUCCH abrégé comprenant :

un premier format PUCCH abrégé dans lequel est appliquée la séquence orthogonale,
et

un second format PUCCH abrégé dans lequel n'est pas appliquée la séquence orthogonale.

# FIG. 1

# FIG. 2

Radio Frame

Slot

| #0 | #1 | #2 | ... | #18 | #19 |

Subframe

# FIG. 3

1 DOWNLINK SLOT

7 OFDM SYMBOLS

$k = N_{RB} \times 12 - 1$

RESOURCE BLOCK
7 X 12 RESOURCE ELEMENTS

$N_{RB} \times 12$ SUBCARRIERS

12 SUBCARRIERS

RESOURCE ELEMENT$(k, \ell)$

$k = 0$

$\ell = 0$          $\ell = 6$

# FIG. 4

CONTROL
REGION

DATA
REGION

FIRST SLOT

SECOND SLOT

FREQUENCY

SUBFRAME

TIME

# FIG. 5

| | m=1 | m=0 |
|---|---|---|
| | m=3 | m=2 |
| | | |
| | m=2 | m=3 |
| | m=0 | m=1 |

CONTROL REGION

DATA REGION

CONTROL REGION

FIRST SLOT | SECOND SLOT

SUBFRAME

FREQUENCY

TIME

# FIG. 6

| | | |
|---|---|---|
| $n_{PRB}=N_{RB}^{UL}-1$ | 2/2a/2b #1 (m=1) | 2/2a/2b #0 (m=0) |
| | 1/1a/1b (m=3) | 1/1a/1b+2/2a/2b (m=2) |
| | 1/1a/1b (m=5) | 1/1a/1b (m=4) |

Control Region (PUCCH)

Data Region (PUSCH)

| | | |
|---|---|---|
| | 1/1a/1b (m=4) | 1/1a/1b (m=5) |
| | 1/1a/1b+2/2a/2b (m=2) | 1/1a/1b (m=3) |
| $n_{PRB}= 0$ | 2/2a/2b #0 (m=0) | 2/2a/2b #1 (m=1) |

Control Region (PUCCH)

Subframe

# FIG. 7a

# FIG. 7b

**FIG. 7c**

EP 3 614 616 B1

# FIG. 8a

DM-RS

# FIG. 8b

DM-RS

42

# FIG. 9

# FIG. 10

# FIG. 11a

# FIG. 11b

# FIG. 11c

# FIG. 11d

# FIG. 11e

# FIG. 12a

# FIG. 12b

# FIG. 12c

# FIG. 12d

# FIG. 12e

# FIG. 13a

OCC1                          OCC2

| | DMRS | | | | DMRS | |

# FIG. 13b

OCC1                         OCC2

| | | | DMRS | | | |

# FIG. 13c

OCC1           OCC2          OCC3

| | | | DMRS | | | |

# FIG. 13d

OCC1                         OCC2

| | | DMRS | DMRS | DMRS | | |

# FIG. 14a

# FIG. 14b

# FIG. 14c

# FIG. 15a

| | DMRS | | | | DMRS | |
|---|---|---|---|---|---|---|

# FIG. 15b

| | | | DMRS | | | |
|---|---|---|---|---|---|---|

# FIG. 15c

| | | DMRS | DMRS | DMRS | | |
|---|---|---|---|---|---|---|

# FIG. 16a

| | | DMRS | | | |
|---|---|---|---|---|---|

# FIG. 16b

| | | | DMRS | | |
|---|---|---|---|---|---|

# FIG. 16c

| | | DMRS | DMRS | | |
|---|---|---|---|---|---|

# FIG. 17

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 2536050 A2

- US 2014078942 A1

### Non-patent literature cited in the description

- Evolved Universal Terrestrial Radio Access (E-UTRA); Physical Channels and Modulation (Release 10). *3GPP TS 36.211 V10.4.0,* December 2011